# EUROPÄISCHE PATENTSCHRIFT

(11) **EP 2 520 989 B1**
(45) Veröffentlichungstag und Bekanntmachung des Hinweises auf die Patenterteilung: **03.02.2016**
(21) Anmeldenummer: 12178263.5
(22) Anmeldetag: 27.07.2012
(51) Int. Cl.: G05B 9/03

(54) **Verfahren zum Betrieb eines hochverfügbaren Systems mit funktionaler Sicherheit sowie ein hochverfügbares System mit funktionaler Sicherheit**
Method for operating a highly available system with failsafe functionality and highly available system with failsafe functionality
Procédé de fonctionnement d'un système hautement disponible avec tolérance d'erreurs et système hautement disponible avec tolérance d'erreurs

(43) Veröffentlichungstag der Anmeldung: 07.11.2012
(73) Patentinhaber: Bytics Engineering AG, 8133 Esslingen (CH)
(72) Erfinder: Leimgruber, Joseph, 8602 Wangen (CH); Foster, Peter, 8404 Winterthur (CH); Bühlmann, Andrea, 8702 Zollikon (CH); Schmid, Peter, 8810 Horgen (CH); Mueller, Thomas, 8180 Bülach (CH); Weibel, Hans, 8965 Berikon (CH); Zingg, Michael, 8406 Winterthur (CH); Renold, Thomas, 8404 Winterthur (CH)
(74) Vertreter: Troesch Scheidegger Werner AG

(56) Entgegenhaltungen:
- EP-A1- 2 128 730
- DE-A1- 4 414 860
- US-A1- 2003 188 221
- US-A1- 2004 078 101
- US-A1- 2004 117 102
- US-A1- 2007 250 183
- ANDERSON K: "IMPLEMENTATION COST/BENEFITS FOR FAULT TOLERANT SYSTEMS", ISA TRANSACTIONS, INSTRUMENT SOCIETY OF AMERICA. PITTSBURGH, US, Bd. 30, Nr. 4, 1. Januar 1991 (1991-01-01) , Seiten 107-116, XP000275598, ISSN: 0019-0578, DOI: 10.1016/0019-0578(91)90014-V

## Beschreibung

Die vorliegende Erfindung betrifft ein Verfahren zum Betrieb eines hochverfügbaren Systems mit funktionaler Sicherheit sowie ein hochverfügbares System mit funktionaler Sicherheit.

Hochverfügbare Systeme sind von besonderer Bedeutung bei der Überwachung und Steuerung von technisch anspruchsvollen Systemen, wie beispielsweise bei Kernkraftwerken, Eisenbahnsignalanlagen, Wasserkraftwerken, usw. Bei diesen Systemen kann es zu erheblichen Schäden kommen, wenn infolge eines Ausfalls der Steuerung eine Abschaltung des Gesamtsystems vorgenommen werden muss. Insbesondere bei Kernkraftwerken kann es zu unkontrollierbaren Zuständen und für die Umwelt äusserst gefährliche Situationen kommen, die es zu vermeiden gilt. Auch bei einem Ausfall eines Zugleitsystems kann es zu einem Zusammenbruch des Verkehrsflusses kommen, wenn beispielsweise die Signalsteuerung nicht einwandfrei funktioniert. Zur Funktionsüberwachung und zur Erkennung von einem Fehlverhalten wurden daher Systeme vorgeschlagen, die mit Parallelrechnern aufgebaut sind. Dabei ist vorgesehen, dass sich die Rechner gegenseitig überwachen, indem die Ausgangssignale zur Steuerung von Anlagekomponenten - auch etwa als Aktuatoren bezeichnet - ständig verglichen werden. Werden Abweichungen in den Ausgangssignalen festgestellt, wird das System abgeschaltet oder zumindest in einen vordefinierten und fehlersicheren Zustand überführt, der allerdings ein weiterer Betrieb des Gesamtsystems nicht zulässt. Ein kontrolliertes Abschalten des Gesamtsystems war hingegen möglich geworden.

Bekannte Systeme der vorstehend genannten Art sind in US 2003/0188221 A1 und EP 2 128 730 A1 beschrieben, wobei die darin beschriebenen teilredundanten Systeme nicht fehlersicher sind.

Eine Aufgabe der vorliegenden Erfindung besteht darin, ein Verfahren anzugeben, durch das ein System hochverfügbar und gleichzeitig fehlersicher wird.

Diese Aufgabe wird durch die in Anspruch 1 angegebenen Merkmale gelöst. Weitere Ausführungsvarianten sowie ein System sind in weiteren Ansprüchen angegeben.

Die vorliegende Erfindung betrifft zunächst ein Verfahren zum Betrieb eines hochverfügbaren und fehlersicheren Systems. Dabei umfasst die Erfindung:
- mindestens drei Kontrolleinheiten, die zum Austauschen von Daten miteinander wirkverbunden sind,
- mehrere, Eingangsdaten erzeugende Sensoreinheiten, die mit jeder der mindestens drei Kontrolleinheiten wirkverbunden sind,
- mehrere Aktuatoreinheiten, die mit jeder der mindestens drei Kontrolleinheiten wirkverbunden sind,
wobei das Verfahren darin besteht,
- dass eine einzige der mindestens drei Kontrolleinheiten bestimmt wird, die operationell aktiv ist, wobei die operationell aktive Kontrolleinheit Ausgangsdaten für alle Aktuatoreinheiten erzeugt,
- dass mindestens eine weitere der mindestens drei Kontrolleinheiten bestimmt wird, die operationell passiv ist bzw. sind, wobei
- alle operationell passiven Kontrolleinheiten dieselben Eingangsdaten wie die operationell aktive Kontrolleinheit erhalten und ebenfalls Ausgangsdaten für alle Aktuatoreinheiten erzeugen,
- dass der operationell aktiven und jeder operationell passiven Kontrolleinheit die Ausgangsdaten aller anderen Kontrolleinheiten zugeführt werden, die operationell aktiv oder operationell passiv sind,
- dass in der operationell aktiven Kontrolleinheit und in jeder der operationell passiven Kontrolleinheit die Ausgangsdaten der operationell aktiven Kontrolleinheit und die Ausgangsdaten aller operationell passiven Kontrolleinheiten miteinander verglichen werden,
- dass die Ausgangsdaten der operationell aktiven Kontrolleinheit zur Steuerung der Aktuatoreinheiten verwendet werden, falls die Ausgangsdaten der operationell aktiven Kontrolleinheit mit den Ausgangsdaten der einzigen operationell passiven Kontrolleinheit oder, sofern mehrere operationell passive Kontrolleinheiten vorhanden sind, falls die Ausgangsdaten der operationell aktiven Kontrolleinheit mit den Ausgangsdaten der Mehrheit der operationell passiven Kontrolleinheiten übereinstimmen, und
- dass die Ausgangsdaten einer der operationell passiven Kontrolleinheiten zur Steuerung der Aktuatoreinheiten verwendet werden, falls die Ausgangsdaten der operationell aktiven Kontrolleinheit nicht mit den Ausgangsdaten der Mehrheit der operationell passiven Kontrolleinheiten übereinstimmen, wobei eine der operationell passiven Kontrolleinheiten zur Steuerung der Aktuatoreinheiten ausgewählt und damit zur neuen operationell aktiven Kontrolleinheit wird, die zur Mehrheit der operationell passiven Kontrolleinheiten mit gleichen Ausgangsdaten gehört,
wobei bei Ausfall einer operationell aktiven Kontrolleinheit (1, ..., 4) diejenige operationell passive Kontrolleinheit (1, ..., 4) zur neuen operationell aktiven Kontrolleinheit (1, ..., 4) gewählt wird, welche eine geringste Ausfallwahrscheinlichkeit aufweist, und wobei die Ausgangsdaten in einem Statusvektor abagelegt werden, der zusätzlich Daten mindestens eines der folgenden Informationstypen umfasst:
- Eigenschaften der Kontrolleinheiten (1, ..., 4), umfassend Anzahl der Fehler und Ausfälle,
- statische Angaben,
wobei die zusätzlichen Daten ebenfalls in den Kontrolleinheiten (1, ..., 4) verarbeitet werden.

Eine Ausführungsvariante des erfindungsgemässen Verfahrens besteht darin, dass ein Fehlverhalten einer operationell passiven oder der operationell aktiven Kontrolleinheit festgestellt wird, wenn deren Ausgangsdaten nicht mit den Ausgangsdaten der Mehrheit der übrigen operationell aktiven und operationell passiven Kohtrolleinheiten übereinstimmen, dass in Abhängigkeit des Fehlverhaltens die fehlbare Kontrolleinheit in einen Synchronisationsztistand oder in einen Fehlerzustand übergeführt wird, und dass eine Synchronisation der fehlbaren Kontrolleinheit mit der operationell aktiven Kontrolleinheit bzw. mit den operationell passiven Kontrolleinheiten angestrebt wird.

Weitere Ausführungsvarianten des erfindungsgemässen Verfahrens bestehen darin, dass eine fehlbare Kontrolleinheit, die aufgrund ihres Fehlverhaltens nicht synchronisiert werden kann, in einen Zustand "unrecoverable" versetzt wird.

Weitere Ausführungsvarianten des erfindungsgemässen Verfahrens bestehen darin, dass die Eingangsdaten der Sensoreinheiten über Schnittstelleneinheiten an die Kontrolleinheiten übermittelt werden, wobei mindestens eine Sensoreinheit mit mehreren Schnittstelleneinheiten wirkverbunden ist und wobei die Schnittstelleneinheiten mit jeder der Kontrolleinheiten wirkverbunden sind, und dass die von mehreren Schnittstelleneinheiten stammenden Eingangsdaten einer oder mehrerer identischer Sensoreinheiten miteinander verglichen werden, wobei diejenigen Eingangsdaten weiterverarbeitet werden, die mit einer Mehrzahl an Eingangsdaten übereinstimmen.

Weitere Ausführungsvarianten des erfindungsgemässen Verfahrens bestehen darin, dass eine kontrollierte Abschaltung vorgenommen wird, falls nur noch eine einzige Kontrolleinheit operationell aktiv oder operationell passiv ist.

Wenn keine operationell passive Kontrolleinheit mehr vorhanden ist, kann eine einwandfreie Funktionsweise der operationell aktiven Kontrolleinheit nicht mehr überprüft werden. Daher erfolgt eine kontrollierte Abschaltung.

Die Ausfallwahrscheinlichkeit kann dabei beispielsweise wie folgt berechnet bzw. festgelegt werden:
- die Anzahl Ausfälle wird durch die Länge des beobachteten Zeitintervallsgeteilt;
- Festlegung auf einen vorbestimmten Wert, insbesondere dann, wenn das System erstmals hochgefahren wird.

Weitere Ausführungsvarianten des erfindungsgemässen Verfahrens bestehen darin, dass die mindestens eine operationell passive Kontrolleinheit synchron zur operationell aktiven Kontrolleinheit betrieben wird.

Noch weitere Ausführungsvarianten des erfindungsgemässen Verfahrens bestehen darin, dass zur Realisierung von nichtfehlersicheren Funktionen weitere Kontrolleinheiten vorgesehen sind, die Zugriff auf alle Informationen haben, wobei die weitere Kontrolleinheit weder operationell aktiv noch operationell passiv sein kann.

Noch weitere Ausführungsvarianten des erfindungsgemässen Verfahrens bestehen darin, dass Verbindungen zwischen Kontrolleinheiten (1, ..., 4), zwischen Kontrolleinheiten (1, 4) und Aktuatoreinheiten (A1, ..., A3) und zwischen Kontrolleinheiten (1, ..., 4) und Sensoreinheiten (S1, ..., S4) über ein Netzwerk (10) geführt werden und wobei eine Fehlererkennung von über das Netzwerk (10) übertragenen Nachrichten und eine Verbindungsüberwachung durch Implementierung einer Sicherheitsstufe von SIL-(Savety Integrity Level) 2 oder höher sicher erfolgen.

Des Weiteren betrifft die Erfindung ein hochverfügbares und fehlersicheres System, umfassend:
- mindestens drei Kontrolleinheiten, die zum Austausche von Daten miteinander wirkverbunden sind,
- mehrere, Eingangsdaten erzeugende Sensoreinheiten, die mit jeder der mindestens drei Kontrolleinheiten wirkverbunden sind,
- mehrere Aktuatoreinheiten, die mit jeder der mindestens drei Kontrolleinheiten wirkverbunden sind,
dadurch gekennzeichnet,
- dass eine einzige der mindestens drei Kontrolleinheiten operationell aktiv ist, wobei die operationell aktive Kontrolleinheit Ausgangsdaten für alle Aktuatoreinheiten erzeugt,
- dass mindestens eine weitere der mindestens drei Kontrolleinheit operationell passiv ist bzw. sind, wobei alle operationell passiven Kontrolleinheiten dieselben Eingangsdaten wie die operationell aktive Kontrolleinheit erhalten und ebenfalls Ausgangsdaten für alle Aktuatoreinheiten erzeugen,
- dass der operationell aktiven und jeder operationell passiven Kontrolleinheit die Ausgangsdaten aller anderen Kontrolleinheiten zuführbar sind, die operationell aktiv oder operationell passiv sind,
- dass in der operationell aktiven Kontrolleinheit und in jeder der operationell passiven Kontrolleinheit Mittel zum Vergleichen der Ausgangsdaten der operationell aktiven Kontrolleinheit mit den Ausgangsdaten der operationell passiven Kontrolleinheiten vorhanden sind,
- dass die Ausgangsdaten der operationell aktiven Kontrolleinheit zur Steuerung der Aktuatoreinheiten verwendbar sind, falls die Ausgangsdaten der operationell aktiven Kontrolleinheit mit den Ausgangsdaten der einzigen operationell passiven Kontrolleinheit übereinstimmen oder, sofern mehrere operationell passive Kontrolleinheiten vorhanden sind, falls die Ausgangsdaten der operationell aktiven Kontrolleinheit mit den Ausgangsdaten der Mehrheit der operationell passiven Kontrolleinheiten übereinstimmen, und
- dass die Ausgangsdaten einer der operationell passiven Kontrolleinheiten zur Steuerung der Aktuatoreinheiten verwendbar sind, falls die Ausgangsdaten der operationell aktiven Kontrolleinheit nicht mit den Ausgangsdaten der Mehrheit der operationell passiven Kontrolleinheiten übereinstimmen, wobei eine der operationell passiven Kontrolleinheiten zur Steuerung der Aktuatoreinheiten wählbar und damit zur neuen operationell aktiven Kontrolleinheit wird, die zur Mehrheit der operationell passiven Kontrolleinheiten mit gleichen Ausgangsdaten gehört,
- dass bei Ausfall einer operationell aktiven Kontrolleinheit (1, ...., 4) diejenige operationell passive Kontrolleinheit (1, ..., 4) zur neuen operationell aktiven Kontrolleinheit (1, ..., 4) wählbar ist, welche eine geringste Ausfallwahrscheinlichkeit aufweist, und
- dass die Ausgangsdaten in einem Statusvektor ablegbar sind, der zusätzliche Daten mindestens eines der folgenden Informationstypen umfasst:
   - Eigenschaften der Kontrolleinheiten (1, ..., 4), umfassend Anzahl der Fehler und Ausfälle, - statische Angaben,
wobei die zusätzlichen Daten ebenfalls in den Kontrolleinheiten (1, ..., 4) verarbeitbar ist.

Eine Ausführungsvariante des erfindungsgemässen Systems besteht darin, dass ein Fehlverhalten einer operationell passiven oder der operationell aktiven Kontrolleinheit feststellbar ist, wenn deren Ausgangsdaten nicht mit den Ausgangsdaten der Mehrheit der übrigen operationell aktiven und operationell passiven Kontrolleinheiten übereinstimmen, dass in Abhängigkeit des Fehlverhaltens die Kontrolleinheit in einen Synchronisationszustand oder in einen Fehlerzustand überführbar ist, und dass eine Synchronisation der fehlbaren Kontrolleinheit mit der operationell aktiven Kontrolleinheit bzw. mit den operationell passiven Kontrolleinheiten angestrebt wird.

Weitere Ausführungsvarianten des erfindungsgemässen Systems bestehen darin, dass eine fehlbare Kontrolleinheit, die aufgrund ihres Fehlverhaltens nicht synchronisierbar ist, in einen Zustand "unrecoverable" versetzbar ist.

Weitere Ausführungsvarianten des erfindungsgemässen Systems bestehen darin, dass die Eingangsdaten der Sensoreinheiten über Schnittstelleneinheiten an die Kontrolleinheiten übermittelbar sind, wobei mindestens eine Sensoreinheit mit mehreren Schnittstelleneinheiten wirkverbunden sind und wobei die Schnittstelleneinheiten mit jeder der Kontrolleinheiten wirkverbunden ist, und dass Mittel zum Vergleichen der von mehreren Schnittstelleneinheiten stammenden Eingangsdaten einer oder mehrerer identischer Sensoreinheiten vorhanden sind, wobei diejenigen Eingangsdaten weiter verarbeitbar sind, die mit einer Mehrzahl an Eingangsdaten übereinstimmen.

Weitere Ausführungsvarianten des erfindungsgemässen Systems bestehen darin, dass eine kontrollierte Abschaltung vornehmbar ist, falls nur noch eine einzige Kontrolleinheit operationell ist.

Die Ausfallwahrscheinlichkeit kann dabei beispielsweise wie folgt berechnet bzw. festgelegt werden:
- die Anzahl Ausfälle wird durch die Länge des beobachteten Zeitintervalls geteilt;
- Festlegung auf eine vorbestimmte Kontrolleinheit, insbesondere dann, wenn das System erstmals hochgefahren wird.

Weitere Ausführungsvarianten des erfindungsgemässen Systems bestehen darin, dass die mindestens eine operationell passive Kontrolleinheit synchron zur operationell aktiven Kontrolleinheit betreibbar ist.

Weitere Ausführungsvarianten des erfindungsgemässen Systems bestehen darin, dass zur Realisierung von nichtfehlersicheren Funktionen weitere Kontrolleinheiten vorgesehen sind, die Zugriff auf alle Informationen, haben, wobei die weitere Kontrolleinheit weder operationell aktiv noch operationell passiv sein kann.

Weitere Ausführungsvarianten des erfindungsgemässen Systems bestehen darin, dass Verbindungen zwischen Kontrolleinheiten (1, ..., 4), zwischen Kontrolleinheiten (1, ..., 4) und Aktuatoreinheiten (A1, ..., A3) und zwischen Kontrolleinheiten (1, ..., 4) und Sensoreinheiten (S1, ..., S4) über ein Netzwerk (10) geführt sind und wobei eine Fehlererkennung von über das Netzwerk (10) übertragbaren Nachrichten und eine Verbindungsüberwachung durch Implementierung einer Sicherheitsstufe von SIL-(Savety Integrity Level) 2 oder höher sicher erfolgen.

Es wird ausdrücklich darauf hingewiesen, dass die vorstehend genannten Ausführungsvarianten der Erfindung beliebig miteinander kombinierbar sind. Lediglich diejenigen Kombinationen von Ausführungsvarianten sind ausgeschlossen, die zu einem Widerspruch führen würden.

Die vorliegende Erfindung wird anhand von in Figuren dargestellten Ausführungsvarianten weiter erläutert. Dabei zeigen:
- Fig. 1: eine schematische Darstellung einer Ausführungsvariante für ein hochverfügbares System mit vier Kontrolleinheiten,
- Fig. 2: wiederum eine schematische Darstellung einer Ausführungsvariante für ein hochverfügbares System mit Schnittstelleneinheiten und deren redundante Anbindung an Kontrolleinheiten,
- Fig. 3: einen möglichen Inhalt für einen Statusvektor, mittels dem Informationen zwischen den Kontrolleinheiten ausgetauscht werden,
- Fig. 4: ein Zustandsdiagramm mit den Zuständen, welche eine Kontrolleinheit einnehmen kann,
- Fig. 5: ein Sequenzdiagramm für eine erste Ausführungsvariante eines erfindungsgemässen Systems,
- Fig. 6: ein weiteres Sequenzdiagramm für eine zweite Ausführungsvariante eines erfindungsgemässen Systems, und
- Fig. 7: eine mögliche Software-Architektur zur Implementierung der Erfindung.

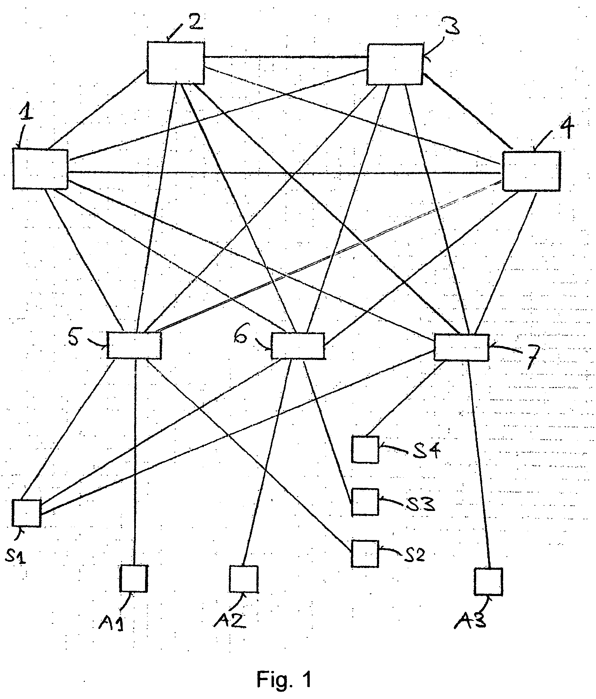

Fig. 1 zeigt eine Ausführungsvariante für ein hochverfügbares System gemäss der vorliegenden Erfindung, wobei das System vier Kontrolleinheiten 1 bis 4, drei Schnittstelleneinheiten 5 bis 7, vier Sensoreinheiten S1 bis S4 und drei Aktuatoreinheiten A1 bis A3 umfasst. Die Kontrolleinheiten 1 bis 4 sind vorzugsweise identisch aufgebaut und sind eigentliche Rechnereinheiten, beispielsweise in Form von Mikrokontrollern oder von handelsüblichen PCs, die mit Standardkomponenten intern als auch mit Standardschnittstellen aufgebaut sind. Jede der Kontrolleinheiten 1 bis 4 ist befähigt, Daten der Sensoreinheiten S1 bis S4 zu empfangen und zu verarbeiten als auch Ausgangsdaten für die Aktuatoreinheiten A1 bis A3 zu erzeugen. Damit kann jede der Kontrolleinheiten 1 bis 4 unabhängig von den anderen Kontrolleinheiten aufgrund der Eingangsdaten der Sensoreinheiten S1 bis S4 die Aktuatoreinheiten A1 bis A3 steuern. Damit jede der Kontrolleinheiten 1 bis 4 die Kontrolle des Systems übernehmen kann, sind die Kontrolleinheiten 1 bis 4 zunächst untereinander wirkverbunden. Ferner sind die Kontrolleinheiten 1 bis 4 mit den Sensoreinheiten S1 bis 4 und den Aktuatoreinheiten A1 bis A3 wirkverbunden. Gemäss Fig. 1 ist die Wirkverbindung zwischen den Kontrolleinheiten 1 bis 4 und den Sensoreinheiten S1 bis S4 bzw. den Aktuatoreinheiten A1 bis A3 über die Schnittstelleneinheiten 5 bis 7 geführt. Denkbar ist - in Abweichung zur Ausführungsvariante gemäss Fig. 1 - auch eine direkte Verbindung zwischen Kontrolleinheiten 1 bis 4 und Sensoreinheiten S1 bis S4 bzw. Aktuatoreinheiten A1 bis A3.

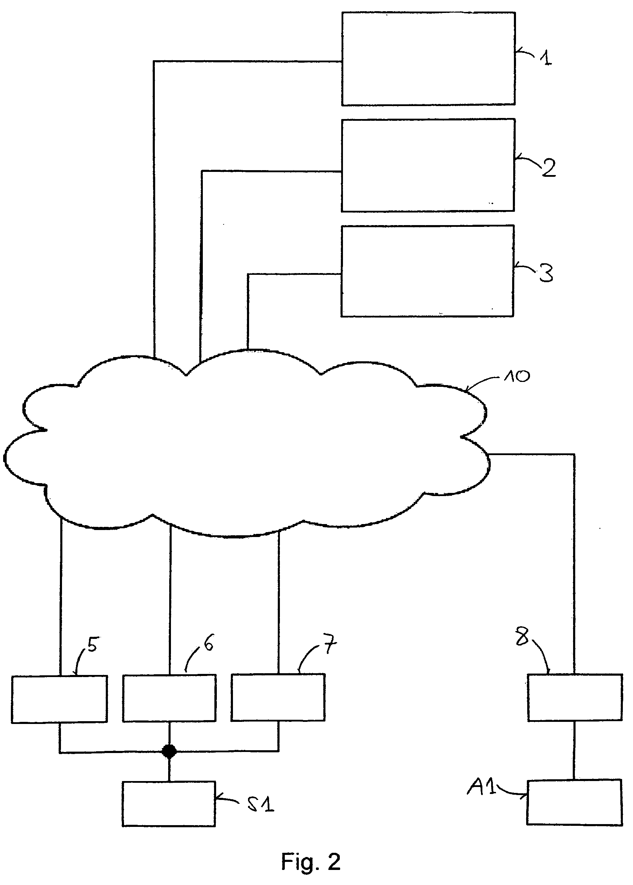

Die Ausführungsvariante mit Schnittstelleneinheiten 5 bis 7, wie sie in Fig. 1 dargestellt ist, hat den Vorteil, dass Redundanz für Signalpfade von einer Sensoreinheit S1 bis S4 zu einer Kontrolleinheit 1 bis 4 bzw. von einer Kontrolleinheit 1 bis 4 zu einer Aktuatoreinheit A1 bis A3 erhalten wird. Dies wird anhand von Fig. 2 weiter erläutert.

Fig. 2 zeigt in einer vereinfachten schematischen Darstellung eine Sensoreinheit S1, eine Aktuatoreinheit A1 und vier Schnittstelleneinheiten 5 bis 8, die mit Kontrolleinheiten 1 bis 3 über ein Netzwerk 10 miteinander verbunden sind. Die hohe Verfügbarkeit des Signalpfades von einer Sensoreinheit S1 zu den Kontrolleinheiten 1 bis 3 kann dadurch erreicht werden, dass man die Sensoreinheit S1 und die Aktuatoreinheit A1 an mehrere Schnittstelleneinheiten 5 bis 8 anschliesst und diese wiederum über das redundante Netzwerk 10 mit mehreren Kontrolleinheiten 1 bis 3 verbindet. Damit ist jede Kontrolleinheit 1 bis 3 über verschiedene Signalpfade mit der Sensoreinheit S1 verbunden. Da die Kontrolleinheiten 1 bis 3 aber nur mit einem Wert der Sensoreinheit S1 weiterrechnen, werden die von der Sensoreinheit S1 (über die verschiedenen Signalpfade) stammenden Eingangsdaten bewertet. Es findet also in jeder der Kontrolleinheiten 1 bis 3 eine Abstimmung statt (auch etwa als "Input Voting" bzw. Eingangsabstimmung bezeichnet), die als Resultat den besten Wert für die Eingangsdaten und die Information über dessen Gültigkeit liefert.

Die dadurch die Eingangsabstimmung in den einzelnen Kontrolleinheiten 1 bis 3 entstehende Aufhebung der Redundanz wird dadurch kompensiert, dass mehrere Kontrolleinheiten 1 bis 3 verwendet werden. Dies führt wiederum dazu, dass jede Kontrolleinheit 1 bis 3 Ausgangsdaten für die anzusteuernde Aktuatoreinheit A1 berechnet. Für die Ausgangsdaten findet in einer Ausführungsvariante der vorliegenden Erfindung eine Abstimmung über die Ausgangsdaten statt (auch etwa als "Output Negotiation" bzw. Ausgangsabstimmung bezeichnet), um die tatsächlich zu verwendenden Ausgangsdaten für die Aktuatoreinheit A1 zu bestimmen.

Die in Fig. 1 dargestellten Verbindungen zwischen den Kontrolleinheiten 1 bis 4, zwischen den Kontrolleinheiten 1 bis 4 und den Schnittstelleneinheiten 5 bis 7 bzw. den Aktuatoreinheiten A1 bis A3 und den Sensoreinheiten S1 bis S4 können über das Netzwerk 10 (wie in Fig. 2 darstellt) geführt werden. Zur Realisierung des Netzwerkes 10 können übliche Netzwerkstandards eingesetzt werden, die beispielsweise unter den Begriffen WAN-(Wide Area Networks), LAN-(Local Area Networks), etc. bekannt sind. Darunter fallen zum Beispiel auch Verbindungen über das Internet. Während für die eigentliche Übertragung eine geringe Sicherheitsstufe (z.B. SIL 0 - d.h. Safety Integrity Level 0), jedoch mit einer hohen Verfügbarkeit, genügt, muss die Fehlererkennung der über das Netzwerk 10 übertragenen Nachrichten und die Verbindungsüberwachung sicher erfolgen. Dass heisst, dass hier eine höhere Sicherheitsstufe von beispielsweise SIL 2 oder höher implementiert wird.

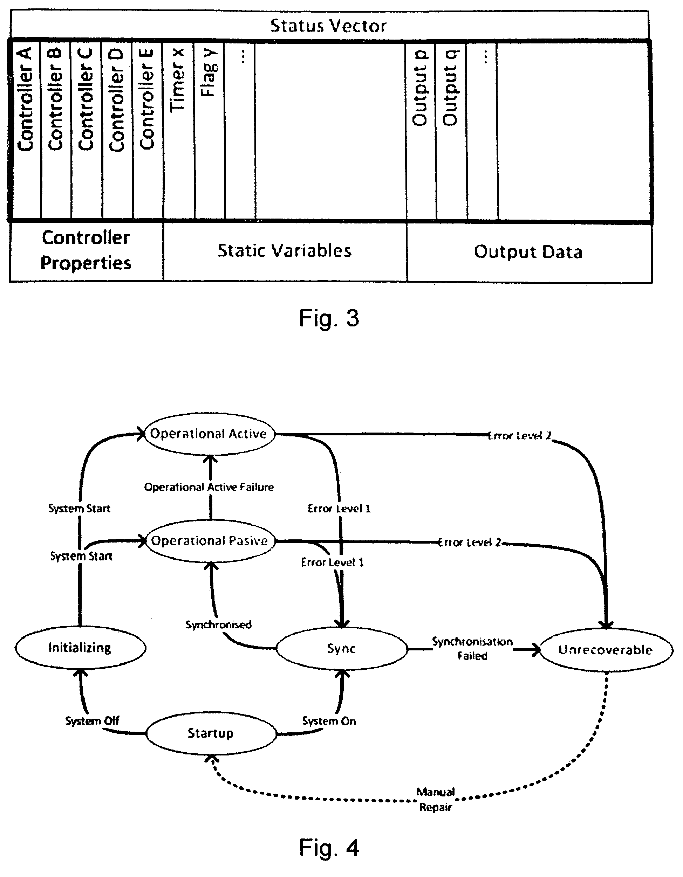

Wie aus Fig. 2 ersichtlich ist, ist die erfindungsgemässe Ausgangsabstimmung in jeder der Kontrolleinheiten 1 bis 3 realisiert. Dazu tauschen die Kontrolleinheiten 1 bis 3 (Fig. 2) bzw. 1 bis 4 (Fig. 1) ihre Ausgangsdaten mit den anderen Kontrolleinheiten 1 bis 4 aus, um diese mit einander abzustimmen bzw. zu vergleichen. Eine der Kontrolleinheiten 1 bis 3 steuert dann die Aktuatoreinheit A1 an. Falls diese Kontrolleinheit falsche Resultate liefert, übernimmt sofort eine andere Kontrolleinheit 1 bis 3 die Steuerung der Aktuatoreinheit A1. Die einzelnen Vorgänge werden anhand von Fig. 4 noch im Detail erläutert.

Diese Ausführungsvariante der vorliegenden Erfindung weist den Vorteil auf, dass keine zusätzlichen Abstimmungseinheiten, in denen das Abstimmen der Ausgangsdaten vorgenommen würde, notwendig sind.

Damit sind bei dieser Ausführungsvariante das Abstimmen der Eingangsdaten und das Abstimmen der Ausgangsdaten von entscheidender Bedeutung und führen zu einer hohen funktionalen Sicherung, welche die Gültigkeit der Signale gewährleistet.

In einer weiteren Ausführungsvariante der vorliegenden Erfindung werden systemrelevante Komponenten daher synchronisiert, wobei die Synchronisation zwei unterschiedliche Aufgaben umfasst: Einerseits dient die Synchronisation zum Abgleichen des Prozessbildes in den Kontrolleinheiten 1 bis 4. Wird eine Kontrolleinheit ausgetauscht, so müssen alle Zustandsinformationen von den anderen Kontrolleinheiten konsistent übernommen werden. Andererseits ist die Synchronisation verantwortlich für die Verteilung des Systemtakts, der gewährleistet, dass alle Kontrolleinheiten und Schnittstelleneinheiten synchron arbeiten.

Im hochverfügbaren und fehlersicheren System gemäss einer Ausführungsvariante der vorliegenden Erfindung werden die verschiedenen Kontrolleinheiten miteinander synchronisiert. Wenn die Kontrolleinheiten vor dem Systemstart alle gleich initialisiert sind und dann gleichzeitig starten, ist dieses Kriterium erfüllt. Damit ein Austauschen einer Kontrolleinheit während dem laufenden Betrieb des Systems möglich ist, müssen weitere Bedingungen erfüllt werden, insbesondere muss ein sogenannter Hot-Swap möglich sein, bei dem eine Kontrolleinheit während dem Betrieb synchronisiert werden kann. Diese und weitere Funktionalitäten werden anhand von Fig. 4 nachfolgend näher erläutert.

Zunächst wird auf Daten eingegangen, die in einer Ausführungsvariante der vorliegenden Erfindung zwischen Kontrolleinheiten ausgetauscht werden. In diesem Zusammenhang wird der Begriff Statusvektor verwendet, der alle Daten enthält, die nach einem noch zu erläuternden Zyklusende zwischen den Kontrolleinheiten ausgetauscht bzw. zwischen diesen abgeglichen werden.

Der Austausch der Datenvektoren hat zwei Zwecke. Zum einen kann durch den Vergleich der Daten überprüft werden, ob alle Kontrolleinheiten korrekt funktionieren, zum anderen ermöglicht es einer neu zugeschalteten Kontrolleinheit, sich mit den übrigen Kontrolleinheiten zu synchronisieren. Dabei ist es nicht unbedingt erforderlich, dass ganze Speicherabbild einer Kontrolleinheit zu übertragen, da zum Beispiel die Eingangsdaten der Sensoreinheiten schon zu Beginn jedes Zyklus kommuniziert werden. Auch Variable, die nur während eines Zyklus existieren, haben keinen wirklichen Nutzen, wenn sie ausgetauscht werden. In Fig. 3 ist eine Variante für einen Statusvektor und deren Daten angegeben.

Durch den zyklischen Austausch der Eigenschaften der Kontrolleinheiten (d.h. Ausgangsdaten und zusätzliche Daten) mittels Statusvektor wird garantiert, dass jede Kontrolleinheit jede andere beteiligte Kontrolleinheit kennt. Es wird dadurch auch erreicht, dass alle Daten erhalten bleiben, auch wenn beispielsweise eine Kontrolleinheit ausfällt.

Der in Fig. 3 gezeigte Statusvektor kann Informationen für fünf verschiedene Kontrolleinheiten umfassen. Bei fünf Kontrolleinheiten können zwei ausfallen, wobei dann immer noch eine einfache Redundanz vorhanden ist und die Fehlersicherheit immer noch gewährleistet ist. Die Daten im Statusvektor können fehlerfrei verglichen werden und wenn eine Kontrolleinheit ersetzt werden muss, bleibt die Information der ausgeschiedenen Kontrolleinheit noch für eine im Statusvektor definierbare Zeit bestehen.

Gemäss dem in Fig. 3 gezeigten Statusvektor enthält dieser drei verschiedene Informationstypen. So sind neben den bereits mehrfach erwähnten Ausgangsdaten die zusätzlichen Informationstypen "Eigenschaften der Kontrolleinheiten" und "statische Angaben" vorhanden. Informationen, die zu den beiden letztgenannten Informationstypen gehören, werden nachstehend auch etwa als zusätzliche Daten bezeichnet.

Zu den Eigenschaften der Kontrolleinheiten gehören beispielsweise die folgenden Informationen:
- Eindeutige Identifikationsnummer oder Name;
- Netzwerkadresse;
- Zustand ("operationell aktiv", "operationell passiv", "ausser Betrieb");
- Anzahl der Fehler und Ausfälle;
- Betriebszeit;
- Zeit im Status "ausser Betrieb", damit der Eintrag nach einer bestimmten Zeit gelöscht werden kann.

Zu den statischen Angaben gehören beispielsweise die folgenden Informationen:
- Timer;
- Zähler;
- Flags, beispielsweise zur Kennzeichnung von defekten Sensoreinheiten.

Der Statusvektor umfasst demzufolge neben den Ausgangsdaten zusätzliche Daten, die grundsätzlich in zwei Informationstypen eingeteilt werden können, wobei beide Informationstypen oder nur einer der Informationstypen vorhanden sein können. Gemäss dieser Ausführungsvariante der Erfindung werden bei der Synchronisation also nicht nur die Ausgangsdaten, sondern auch die zusätzlichen Daten verarbeitet, womit jede Kontrolleinheit jede andere beteiligte Kontrolleinheit kennt. Dadurch werden alle Daten (Ausgangsdaten und zusätzliche Daten) erhalten, und zwar auch dann, wenn eine Kontrolleinheit ausfällt bzw. ausgefallen ist.

Grundsätzlich besteht bei der Realisation des erfindungsgemässen Systems die Möglichkeit, eine beliebige Anzahl an Kontrolleinheiten einzusetzen. Der Datenverkehr zwischen den Kontrolleinheiten steigt mit zunehmender Anzahl an Kontrolleinheiten und wirkt damit limitierend. Die hohe Verfügbarkeit und die Sicherheit steigt aber mit steigender Anzahl an Kontrolleinheiten an: So lässt die Erfindung bei einem Einsatz von m Kontrolleinheiten total m-2 Kontrolleinheitsausfälle zu, ohne dass es zu einem Betriebsunterbruch kommt, womit nach diesen Kontrolleinheitsausfällen die Sicherheit mit zwei Kontrolleinheiten immer noch garantiert ist und die defekten Kontrolleinheiten während dem Betrieb ersetzt werden können.

In einer weiteren Ausführungsvariante der vorliegenden Erfindung ist vorgesehen, anstelle eines zwei-aus-vier Systems (wie es in Fig. 1 dargestellt ist) beispielsweise ein drei-aus-fünf System (in den Figuren nicht dargestellt) zu realisieren. Bei einem drei-aus-fünf System müssen mindestens drei Kontrolleinheiten synchronisiert sein, mithin auch die gleichen Ausgangsdaten bei gleichen Eingangsdaten generieren. Ein sicheres System ist also bei drei synchronisierten Kontrolleinheiten gerade noch gegeben. Fällt dann eine weitere Kontrolleinheit aus, muss das System heruntergefahren werden. Selbstverständlich sind weitere Ausführungsvarianten von solchen extrem hoch verfügbaren Systemen denkbar. So könnte beispielsweise auch ein vier-aus-zehn System oder ein fünf-aus-zehn System realisiert werden. Höhere Ordnungen sind grundsätzlich auch denkbar.

Es wurde bereits darauf hingewiesen, dass die Abstimmung der Ausgangsdaten aller Kontrolleinheiten von grosser Bedeutung ist. Aus diesem Grund muss bei einer Realisation der Ausgangsdatenabstimmung ("Output Voting") in den Kontrolleinheiten auch der Statusvektor alle von den einzelnen Kontrolleinheiten berechneten Ausgangsdaten enthalten. Entsprechend sind die Ausgangsdaten ("Output Data") auch im in Fig. 3 dargestellten Statusvektor angegeben.

Da eine neu eingefügte Kontrolleinheit kein Wissen über den Zustand des Systems hat, ist es in einer weiteren Ausführungsvariante vorgesehen, dass auch Variablen ausgetauscht werden, welche Information aus vergangenen Zyklen enthalten. Dazu gehören beispielsweise alle als statisch deklarierten Variablen, wie zum Beispiel:
- Uhr;
- Zähler;
- Flags, z.B. als defekt markierte Sensoreinheiten.

Fig. 4 zeigt ein Zustandsdiagramm, anhand dessen die Steuerung eines hochverfügbaren Systems nach der vorliegenden Erfindung vorgenommen werden kann. Die in Fig. 4 dargestellten Zustände stellen Zustände dar, in denen sich die einzelnen Kontrolleinheiten befinden können, wobei sich - mit einer Ausnahme - immer mehrere Kontrolleinheiten in einem dargestellten Zustand befinden können. Die Ausnahme betrifft den Zustand "operationell aktiv": In diesem Zustand kann sich zu einer gewissen Zeit nur eine einzige Kontrolleinheit befinden. Bevor hierzu weitere Details bekannt gegeben werden, wird zunächst das Aufstarten und Initialisieren des Systems bzw. einer Kontrolleinheit erläutert.

Wird eine Kontrolleinheit neu in das System eingefügt, wird unterschieden, ob die Anlage bereits läuft, oder ob es sich um einen Start der Anlage handelt. Im Zustand "Start-up" überwacht die Kontrolleinheit bzw. die Kontrolleinheiten für eine kurze Zeit die Netzwerkkommunikation, um herauszufinden, ob bereits andere Kontrolleinheiten im System aktiv sind. Gleichzeitig werden die Kontrolleinheit bzw. Kontrolleinheiten versuchen, sich mit allfällig aktiven Kontrolleinheiten zu synchronisieren, wobei in diesem Zusammenhang unter aktiv eine Kontrolleinheit im "operationell aktiven" oder im "operationell passiven" Zustand gemeint ist. Falls eine Kontrolleinheit aktiv ist, wechselt die Kontrolleinheit in den Zustand "Sync". Sind während der Netzwerküberwachungsphase aber keine anderen aktiven Kontrolleinheiten ausmachbar, nimmt die neue Kontrolleinheit an, dass die Anlage neu gestartet wird und sie wechselt in den Zustand "Initializing".

Der Zustand "Initializing" ist notwendig, damit bei einem Systemstart nicht der Fall auftritt, dass nur eine einzige Kontrolleinheit den Zustand "Operational Active" erreicht und aus Sicherheitsgründen diesen aber gleich wieder verlässt, da keine Steuerungsredundanz vorhanden ist. Daher ist es vorgesehen, dass bei einem System-Start mindestens zwei Kontrolleinheiten im selben Zyklus in einen Zustand "Operational" wechseln.

Im Zustand "Initializing" teilt die neue Kontrolleinheit ihre Bereitschaft über das Netzwerk mit. Kommt eine zweite Kontrolleinheit in den Zustand "Initializing" machen sie untereinander aus, wer die Führung übernimmt und in den Zustand "Operational Active" wechselt. Die andere Kontrolleinheit geht in den Zustand "Operational Passive" über. Die Entscheidung, welche Kontrolleinheit die Führung übernimmt, wird beispielsweise anhand der MAC-(Machine Access Code)-Adresse gefällt, die üblicherweise einer Kontrolleinheit mit deren Herstellung zugewiesen worden ist.

Der Zustand "Operational Active" und der Zustand "Operational Passive" sind sich sehr ähnlich. Wie der Name schon sagt, sind beide Zustände operationell, das heisst alle Kontrolleinheiten in diesen beiden Zuständen verarbeiten Eingangsdaten zu Ausgangsdaten und tauschen ihre Resultate mit den anderen Kontrolleinheiten aus. Durch den Vergleich der eigenen Daten mit den Daten der anderen Kontrolleinheiten, kann jede Kontrolleinheit erkennen, wo allenfalls ein Fehler aufgetreten ist. Eine Kontrolleinheit, die fehlerhafte Werte liefert, wechselt, je nachdem wie schwerwiegend der Fehler ist, in den Zustand "Sync" oder in den Zustand "Unrecoverable".

Der Unterschied zwischen dem Zustand "Operational Active" und dem Zustand "Operational Passive" besteht darin, dass die Kontrolleinheit im Zustand "Operational Active" die Führungsrolle im System übernimmt bzw. innehat. Sie koordiniert das ganze System und steuert die Ein- und Ausgänge an. Im Zustand "Operational Active" kann nur eine einzige Kontrolleinheit sein. Demgegenüber können im Zustand "Operational Passive" gleichzeitig mehrere Kontrolleinheiten sein.

Die Kontrolleinheit bzw. die Kontrolleinheiten, die sich im Zustand "Operationell Passive" befinden, dienen der Erkennung von Fehlern und sind im Falle eines Ausfalls der im Zustand "Operational Active" befindlichen Kontrolleinheit bereit, ihre Position zu übernehmen. Bei mehreren Kontrolleinheiten im Zustand "Operational Passive" wird anhand der Zuverlässigkeit der Kontrolleinheit entschieden, welcher der erste Kandidat ist, in den Zustand "Operational Active" zu wechseln. Die Zuverlässigkeit wird beispielsweise anhand der Fehlerrate der in Frage kommenden Kontrolleinheit berechnet. Haben mehrere in Frage kommenden Kontrolleinheiten die gleiche Zuverlässigkeit, wird beispielsweise wiederum aufgrund der MAC-Adresse der einzelnen Kontrolleinheiten entschieden.

Im Zustand "Sync" befinden sich diejenigen Kontrolleinheiten, welche entweder neu zum System hinzugefügt oder aber aufgrund eines leichten Fehlers aus dem Zustand "Operational Active" oder "Operational Passive" verbannt wurden. Diese Kontrolleinheiten versuchen im Zustand "Sync" sich im laufenden Betrieb mit den Kontrolleinheiten im Zustand "Operational Passive" und im Zustand "Operational Active" zu synchronisieren. Gelingt dies, wechseln die Kontrolleinheiten in den Zustand "Operational Passive", andernfalls scheiden sie definitiv aus und kommen in den Zustand "Unrecoverable".

In den Zustand "Unrecoverable" gelangt eine Kontrolleinheit, wenn sie während des Betriebs einen schwerwiegenden Fehler gemacht hat, oder wenn sie sich mit den anderen Kontrolleinheiten nicht synchronisieren lässt. Eine Kontrolleinheit im Zustand "Unrecoverable" muss manuell repariert oder ausgewechselt werden und dann neu über den Zustand "Start-up" dem System hinzugefügt werden.

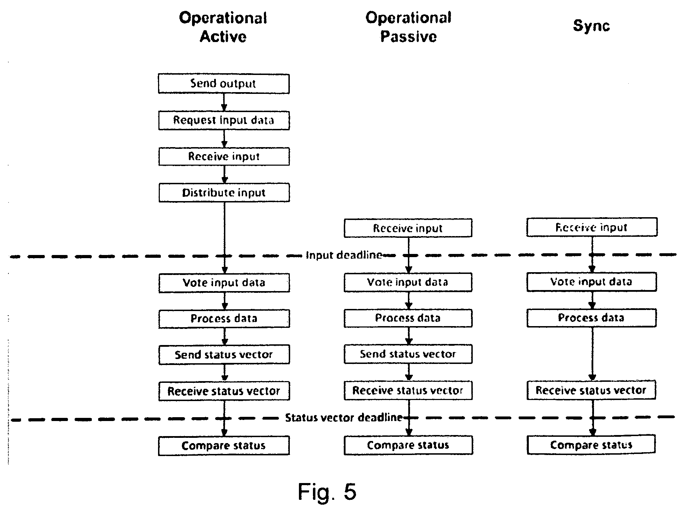

In einer weiteren Ausführungsvariante der vorliegenden Erfindung ist es vorgesehen, dass die Kontrolleinheiten während des Betriebs synchron laufen und Zykluszeiten einhalten. Davon betroffen sind die Kontrolleinheiten, die sich in einem der Zustände "Operational Active", "Operational Passive" oder "Sync" befinden. In Fig. 5 sind diese drei Zustände in einem Sequenzdiagramm dargestellt. Diese Darstellung bezieht sich nicht auf Zyklusbeginn oder Zyklusende, sondern auf die Zustandswechsel. Die Zustandswechsel werden jeweils nach der Auswertung der neu verfügbaren Eingangsdaten ausgeführt, deswegen ist dann zum Beispiel auch die erste Aufgabe der Kontrolleinheit im Zustand "Operational Active", diese Eingangsdaten den übrigen Kontrolleinheiten zur Verfügung zu stellen, d.h. an diese zu verteilen. Das bedeutet aber nicht zwingend, dass das Verteilen der Ausgangsdaten am Anfang eines Zyklus erfolgen muss.

Nach dem Verteilen der Ausgangsdaten an die übrigen Kontrolleinheiten ist es die Aufgabe der operationell aktiven Kontrolleinheit sicherzustellen, dass alle Kontrolleinheiten die neuen Eingangsdaten der Sensoreinheiten erhalten. Dabei wird in einer spezifischeren Ausführungsform der vorliegenden Erfindung darauf geachtet, dass alle Kontrolleinheiten exakt dieselben Eingangsdaten erhalten. Die operationell aktive Kontrolleinheit fordert also die Eingangsdaten an und leitet sie anschliessend an alle anderen Kontrolleinheiten weiter.

Die neuen Eingangsdaten werden dann von allen Kontrolleinheiten verarbeitet, indem die Eingangsdaten miteinander abgestimmt werden ("Input Voting"). Das Resultat des Abstimmvorganges unter Berücksichtigung aller Eingangsdaten wird zur Bestimmung bzw. Berechnung der neuen Ausgangsdaten verwendet, und zwar werden die so abgeglichenen neuen Ausgangsdaten in allen Kontrolleinheiten (d.h. zumindest in allen Kontrolleinheiten, die operationell aktiv oder operationell passive sind) verwendet.

In einem weiteren Schritt tauschen die Kontrolleinheiten ihre Ausgangsdaten aus, um zu entscheiden, ob alle Kontrolleinheiten weiterhin fehlerfrei funktionieren ("Output Voting"). Dabei werden nicht nur die Ausgangsdaten untereinander kommuniziert sondern insbesondere alle System-relevanten Variablen, wie sie bereits im Zusammenhang mit dem Statusvektor beschrieben worden sind.

Das können zum Beispiel Zählervariablen oder Statusinformationen sein. Bei einer bevorzugten Ausführungsvarianten der vorliegenden Erfindung ist vorgesehen, dass die Daten des Statusvektors, wie sie im Zusammenhang mit der Fig. 3 beschrieben worden sind, in allen Kontrolleinheiten vorhanden sind bzw. bestimmt werden. Das heisst, dass, wenn eine Kontrolleinheit ihren nächsten Zustand berechnet, sie gleichzeitig auch die nächsten Zustände der anderen Kontrolleinheiten nachführt. Dies wird dann im nächsten Zyklus verglichen und kontrolliert. Durch diese Massnahmen soll verhindert werden, dass bei einem Ausfall einer Kontrolleinheit Information verloren geht.

Eine Kontrolleinheit, die sich im Zustand "Sync" befindet, hat gar keine Informationen, welche sie den anderen Kontrolleinheiten mitteilen könnte. Trotzdem werden die Eingangsdaten der operationell aktiven und operationell passiven Kontrolleinheiten abgeglichen, um die Möglichkeit zu schaffen, sich mit dem System zu synchronisieren, d.h. vom Zustand "Sync" in den Zustand "Operational Passive" gelangen zu können.

Nachdem jede Kontrolleinheit ihre Eingangsdaten abgeglichen hat und ihren nächsten Zustand kennt, beginnt die Sequenz wieder von vorne und die operationell aktive Kontrolleinheit steuert die Aktuatoreinheiten mit ihren Ausgangsdaten an.

Der in Fig. 5 dargestellte Zyklus weist einen Zeitpunkt auf, in dem die Kontrolleinheiten auf die Statusvektoren der anderen Kontrolleinheiten warten müssen. Dieser Zeitpunkt ist in Fig. 5 mit einer unterbrochenen Linie und mit der Bezeichnung "Status vector deadline" gekennzeichnet. Die Kontrolleinheiten müssen also soweit synchron laufen, dass zu diesem Zeitpunkt die Informationen für den jeweiligen Statusvektor vorliegen und verteilt werden können. Gelingt es einer Kontrolleinheit nicht, Informationen für den Statusvektor bis zum Zeitpunkt "Status vector deadline" bereitzustellen, wird diese Kontrolleinheit als fehlerhaft bezeichnet und deren Ausgangsdaten werden mit den Ausgangsdaten der übrigen massgebenden Kontrolleinheiten nicht abgeglichen.

Auf der anderen Seit,e wird in einer weiteren Ausführungsform der vorliegenden Erfindung vorgeschlagen, ein Zeitpunkt festzulegen, bei dem die operationell aktive Kontrolleinheit die Eingangsdaten spätestens an die anderen Kontrolleinheiten verteilt haben muss. Dieser Zeitpunkt ist in Fig. 5 ebenfalls mit einer unterbrochenen Linie dargestellt und mit der Bezeichnung "Input deadline" gekennzeichnet. Damit kann eine operationell passive Kontrolleinheit feststellen, ob die operationell aktive Kontrolleinheit die Eingangsdaten rechtzeitig verteilt hat. Falls zum Zeitpunkt "Input deadline" keine Eingangsdaten erhalten worden sind, wird angenommen, dass die operationell aktive Kontrolleinheit ausgefallen ist.

Damit ein Gleichlauf oder Synchronlauf der Kontrolleinheiten gewährleistet bzw. überwacht werden kann, ist gemäss weiterer Ausführungsvarianten der vorliegenden Erfindung vorgesehen, ein Zeitsynchronisationsprotokoll (z.B. nach dem Standard IEEE 1588) zu verwenden.

Auch wäre es denkbar, dass ein Zyklus durch eine Zyklus-Start Nachricht, die von der operationell aktiven Kontrolleinheit ausgesendet wird, gestartet wird, womit der Zyklustakt durch die operationell aktive Kontrolleinheit vorgegeben wird. Die operationell passiven Kontrolleinheiten müssen aber die Taktvorgabe überwachen und auf einen Ausfall der operationell aktiven Kontrolleinheit reagieren. Ohne eine Überwachungsfunktion kann sich das System blockieren, wenn keine Zyklus-Start Nachrichten von der operationell aktiven Kontrolleinheit mehr versendet werden.

Die Zyklusgrenze bestimmt, zu welchem Zeitpunkt alle Kontrolleinheiten nach jedem Durchgang wieder gleichzeitig starten. Nachfolgend werden drei mögliche Ausführungsvarianten aufgezeigt mit Angaben zu möglichen Zeitpunkten, in denen ein Zyklus beginnen kann.

Eine erste Variante bezieht sich auf die Verfügbarkeit der Eingangsdaten bzw. der Ausgangsdaten: Bei dieser Variante beginnt der Zyklus mit dem Lesen der Eingangsdaten von den Sensoreinheiten und wird mit dem Schreiben der Ausgangsdaten für die Aktuatoreinheiten beendet. Daraus ergibt sich eine logische Abfolge von Prozessschritten und zudem kann bei dieser Variante sehr schnell auf Eingangsdaten reagiert werden.

Eine zweite Variante bezieht sich auf Zustandswechsel: Diese Variante stimmt im Wesentlichen mit dem Sequenzdiagramm überein. Ein allfälliger Zustandswechsel würde somit mit einem Zyklusübergang zusammenfallen. Dies bringt einige Vorteile bei der Implementierung und hat auch zur Folge, dass die Aktuatoreinheiten in einem regelmässigen Takt angesteuert werden.

Eine dritte Variante bezieht sich auf den Zeitpunkt der Verfügbarkeit des Statusvektors: Nachdem der eigene Statusvektor an die anderen Kontrolleinheiten gesendet wurde, muss auf die Daten der anderen Kontrolleinheiten gewartet werden. Durch Festlegen der Zyklusgrenze auf den Zeitpunkt der Verfügbarkeit des Statusvektors werden allfällige Wartezeiten eliminiert.

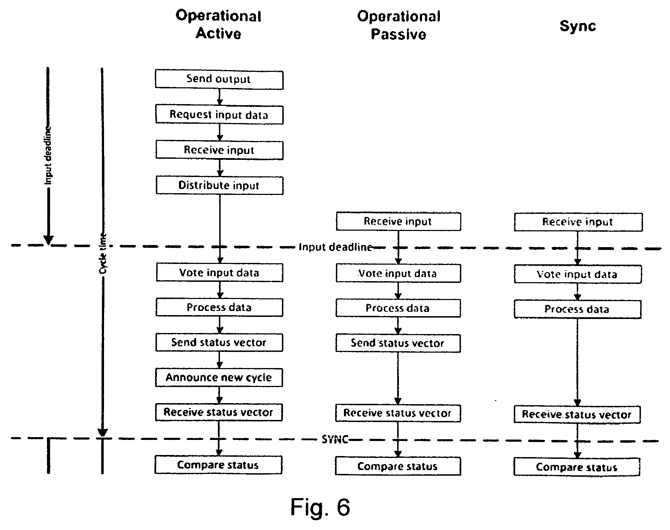

Fig. 6 zeigt ein Sequenzdiagramm für die zuletzt erwähnte Variante, d.h. die dritte Variante zur Festlegung des Beginns eines Zyklus. Damit die Kontrolleinheiten synchron laufen, wurde ein Prozessschritt zur Erzeugung einer Nachricht "announce new cycle" durch die operationell aktive Kontrolleinheit eingefügt, welche den anderen Kontrolleinheiten mitteilt, wann der neue Zyklus beginnt. Wenn der neue Zyklus beginnt, starten alle Kontrolleinheiten zwei Timer. Einen um sicherzustellen, dass die Eingangsdaten empfangen werden, den anderen um zu kontrollieren, ob die Zykluszeit eingehalten werden kann. Im Vergleich zu Systemen mit nur einer Kontrolleinheit entsteht beim erfindungsgemässen System mit mehreren Kontrolleinheiten mit Abgleich zusätzliche Kommunikation zwischen den Kontrolleinheiten, um synchron zu bleiben. Das hat Auswirkungen auf die Zykluszeit, was entsprechend berücksichtigt werden muss.

In einem Netzwerk mit mehr Komponenten und mehr Eingangs- und Ausgangsdaten steigt der zeitliche Aufwand für die Kommunikation an. Ebenso haben die örtliche Ausdehnung des Netzwerks sowie eine Zwischenspeicherung von Paketen in allfälligen Switches eine Auswirkung auf die Netzwerkkommunikationszeiten und somit auf die Zykluszeit. All diese Faktoren müssen gebührlich berücksichtigt werden. Am wenigsten Zeit wird für den Abgleich von Eingangsdaten benötigt. Allerdings gilt dies nur, falls einfache Abgleichungen der Eingangsdaten vollzogen werden. Wenn das Abgleichen der Eingangsdaten ("Input Voting") auch noch eine Toleranz für die kurzzeitige Abweichung der Eingangsdaten beinhaltet, muss entsprechend mehr Zeit eingerechnet werden.

Eine Abschätzung der Zykluszeit für ein erfindungsgemässes System mit vier Kontrolleinheiten und zehn Schnittstelleneinheiten hat ergeben, dass Systeme mit Zykluszeiten unter 10ms realisiert werden können. Damit können die Anforderungen der meisten industriellen Anwendungen mit dem erfindungsgemässen Verfahren ohne weiteres erfüllt werden.

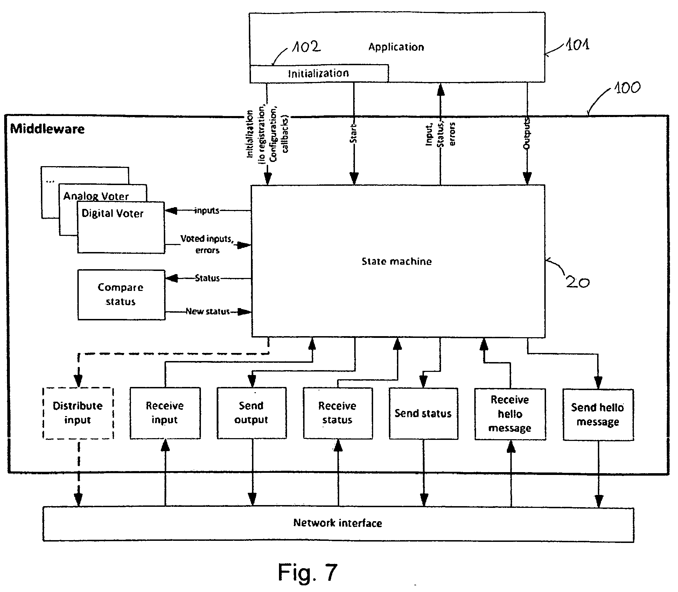

Im Folgenden wird die vorliegende Erfindung anhand von Fig. 7 weiter erläutert, in der eine mögliche Software-Architektur dargestellt ist, wie sie in einer Kontrolleinheit realisiert sein kann.

Der zentrale Punkt der Software-Architektur ist beim vorgeschlagenen Verfahren zur Realisierung eines hoch verfügbaren und fehlersicheren Systems eine Status-Maschine 20. Die Status-Maschine 20 verkörpert die eigentliche neuartige Middelware 100, mit welcher das erfindungsgemässe System bzw. das erfindungsgemässe Verfahren zur Steuerung des erfindungsgemässen Systems realisiert wird.

Ausgehend von die Middelware 100 werden die verschiedenen Funktionen aufgerufen und ausgeführt, je nachdem, in welchem Zustand sich die Kontrolleinheit gerade befindet. Die Software-Architektur basiert auf den in Fig. 4 dargestellten Zustandsdiagramm und auf dem Zyklus gemäss einem der in Fig. 5 und 6 dargestellten Sequenzdiagramm.

Eine Applikation 101 definiert das eigentliche Systemverhalten und ist nicht Teil der Middleware 100. Durch eine Initialisierung 102 werden Ein- und Ausgänge der Status-Maschine 20 definiert. Ebenfalls werden statische Variablen definiert, die für den Vergleich der verschiedenen Kontrolleinheiten untereinander wichtig sind. Zusätzlich werden mehrere Eingänge zusammengefasst und für einen Abgleich definiert, was von der Middleware 100 übernommen wird.

Nach der Initialisierung 102 übergibt die Applikation 101 der Status-Maschine die Kontrolle und wird dann nur noch aufgerufen, um aus den übergebenen Eingangsdaten und Statuswerten die entsprechenden Ausgangsdaten zu berechnen. Zudem kann die Applikation 101 auch auf spezifische Anfrage (Exceptions) der Middleware 100 reagieren. Zum Beispiel, wenn ein Wert einer Sensoreinheit ungültig oder eine Schnittstelleneinheit 5 bis 8 (Fig. 2) ausgefallen ist.

Bei der Initialisierung (Funktionsblock 102) wird die Systemstruktur mit allen Schnittstelleneinheiten, Sensoreinheiten, Aktuatoreinheiten und den dazugehörigen Parametern in die Status-Maschine 20 eingelesen.

Bei der Initialisierung der Eingänge (und damit der Eingangsdaten) kann ein Fehlersignal übergeben werden. Falls der entsprechende Eingang ausfällt, wird das Fehlersignal von der Middleware 100 gesetzt. Die Applikation 101 muss das Fehlersignal prüfen, um entsprechend auf einen Ausfall der entsprechenden Sensoreinheit reagieren zu können. Es ist auch möglich, dasselbe Fehlersignal für eine Gruppe von Eingängen zu verwenden, falls die Gruppe als Ganzes von Bedeutung ist oder falls alle Eingänge dieser Gruppe gleich behandelt werden sollen.

Bei einem Abgleichvorgang wird ein weiteres Fehlersignal definiert, das gesetzt wird, falls das abgeglichene Resultat nicht mehr gültig ist.

Werden verschiedene Eingangsdaten miteinander abgeglichen, so wird vorausgesetzt, dass nicht alle Eingänge gleichzeitig reagieren. Aus diesem Grund wird bei einem Wechsel des Eingangswertes ein Timer gestartet. Bevor dieser Timer abläuft, müssen alle anderen Eingänge den gleichen Wert annehmen. Es werden jedem Eingang zwei Timer zugeordnet, einer für eine steigende, der andere für eine fallende Flanke. Somit können nicht nur verzögerte Wertänderungen richtig behandelt werden, sondern auch zeitverschobene Pulse. Eine Bedingung dabei ist, dass innerhalb der Zeittoleranz der Wert einer Sensoreinheit nicht mehr als zweimal wechselt.

In einer weiteren Ausführungsform der vorliegenden Erfindung, wird eine weitere Kontrolleinheit zur Überwachung in das System eingefügt. Die weitere Kontrolleinheit wird dabei gezwungen, im Zustand "Sync" zu bleiben. Gleichzeitig kennt die weitere Kontrolleinheit das System vollständig, ist jedoch nicht mit zeitkritischen Aufgaben beschäftigt. Die weitere Kontrolleinheit hat also Zugang zu allen systemrelevanten Informationen (Statusvektor, etc.) der Anlage, stört aber den Betrieb in keiner Weise. In diesem Überwachungszustand empfängt diese, auch etwa als Überwachungseinheit bezeichnete Kontrolleinheit, die Zustandsmeldungen der anderen Kontrolleinheiten und anstelle der Benutzerapplikation wird eine Visualisierungsfunktion aufgerufen (in Fig. 7 nicht dargestellt). Die Betriebsfunktionen sind in diesem Zustand völlig von den Monitorfunktionen entkoppelt.

Mit einer zusätzlichen Kontrolleinheit im Sinne der Überwachungseinheit löst man gleichzeitig noch eine weitere Aufgabe. Grundsätzlich braucht es keine Interaktion zwischen Kontrolleinheit und einem Systemadministrator. Entweder läuft das System, oder es läuft nicht. Eine Ausnahme ist dabei ein Zurücksetzen fehlerhafter Sensoreinheiten oder Schnittstelleneinheiten sowie das geordnete Herunterfahren des Systems. Da ein solches Kommando unbedingt bei allen Kontrolleinheiten im selben Zyklus ausgeführt werden muss, ist es am besten eine solche Anweisung als Schalter zu implementieren, welcher wie ein Wert einer Sensoreinheit beispielsweise durch eine Schnittstelleneinheit jeden Zyklus abgefragt wird. Dazu kann man auch die Überwachungseinheit verwenden, indem man darauf ein virtuelles Schnittstellenmodul implementiert.

Bei jedem hochverfügbaren und fehlersicheren System ist jede Änderung, insbesondere auch jede Software-Änderung, mit einem grossen Aufwand verbunden, da neue oder geänderte Funktionen von einer externen Instanz zertifiziert werden müssen. Aus diesem Grund wurde beim erfindungsgemässen System eine Aufteilung der Software in einen sicheren und einen nicht-sicheren Teil vorgeschlagen. Beide Teilsysteme müssen hochverfügbar sein.

Um eine hohe Flexibilität zu erreichen, wurde der sichere Teil auf das absolute Minimum beschränkt. Wenn beispielsweise eine Pause zwischen zwei Arbeitsschritten kein Sicherheitsproblem verursacht, wird der Startbefehl für den nächsten Arbeitsschritt aus dem unsicheren Teilsystem generiert.

Während im sicheren Teilsystem beispielsweise die Funktionen gemäss den Erläuterungen im Zusammenhang mit den Fig. 4 bis 6 implementiert und entsprechend zertifiziert sind, ist das unsichere Teilsystem entsprechend der bereits erläuterten weiteren Kontrolleinheit (auch Überwachungseinheit oder Monitoreinheit genannt) implementiert. Grundsätzlich werden beim unsicheren Teilsystem also so viele weitere Kontrolleinheiten benötigt, die zur Realisierung der Funktionen des unsicheren Teilsystems notwendig sind, wobei diese weiteren Kontrolleinheiten im Zustand "Synch" (siehe Fig. 4) bleiben, somit Zugang zu allen System-relevanten Informationen (auch auf diejenige, die zum sicheren Teilsystem gehören) haben, gleichzeitig aber das sichere Teilsystem nicht beeinflussen.

## Patentansprüche

1. Verfahren zum Betrieb eines hochverfügbaren und fehlersicheren Systems, das umfasst:
- mindestens drei Kontrolleinheiten (1, ..., 4), die zum Austauschen von Daten miteinander wirkverbunden sind,
- mehrere, Eingangsdaten erzeugende Sensoreinheiten (S1, ...., S4), die mit jeder der mindestens drei Kontrolleinheiten (1, ..., 4) wirkverbunden sind,
- mehrere Aktuatoreinheiten (A1, ..., A3), die mit jeder der mindestens drei Kontrolleinheiten (1, ..., 4) wirkverbunden sind,
wobei das Verfahren darin besteht,
- dass eine einzige der mindestens drei Kontrolleinheiten (1, ..., 4) bestimmt wird, die operationell aktiv ist, wobei die operationell aktive Kontrolleinheit (1, ..., 4) Ausgangsdaten für alle Aktuatoreinheiten (A1, ..., A3) erzeugt,
- dass mindestens eine weitere der mindestens drei Kontrolleinheiten (1, ..., 4) bestimmt wird, die Operationell passiv ist bzw. sind, wobei alle operationell passiven Kontrolleinheiten (1, ..., 4) dieselben Eingangsdaten wie die operationell aktive Kontrolleinheit (1, ..., 4) erhalten und ebenfalls Ausgangsdaten für alle Aktuatoreinheiten (A1, ..., A3) erzeugen,
- dass der operationell aktiven und jeder operationell passiven Kontrolleinheit (1, ..., 4) die Ausgangsdaten aller anderen Kontrolleinheiten (1, ..., 4) zugeführt werden, die operationell aktiv oder operationell passiv sind,
- dass in der operationell aktiven Kontrolleinheit (1, ..., 4) und in jeder der operationell passiven Kontrolleinheiten (1, ..., 4) die Ausgangsdaten der operationell aktiven Kontrolleinheit (1, ..., 4) und die Ausgangsdaten aller operationell passiven Kontrolleinheiten (1, ..., 4) miteinander verglichen werden,
- dass die Ausgangsdaten der operationell aktiven Kontrolleinheit, (1, ..., 4) zur Steuerung der Aktuatoreinheiten (A1, ..., A3) verwendet werden, falls die Ausgangsdaten der operationell aktiven Kontrolleinheit (1, ..., 4) mit den Ausgangsdaten der einzigen operationell passiven Köntrolleinheit (1, ..., 4) übereinstimmen oder, sofern mehrere operationell passive Kontrolleinheiten (1, ..., 4) vorhanden sind, falls die Ausgangsdaten der operationell aktiven Kontrolleinheit (1, ..., 4) mit den Ausgangsdaten der Mehrheit der operationell passiven Kontrolleinheiten (1, ..., 4) übereinstimmen, und
- dass die Ausgangsdaten einer der operationell passiven Kontrolleinheiten (1, ..., 4) zur Steuerung der Aktuatoreinheiten (A1, ..., A3) verwendet werden, falls die Ausgangsdaten der operationell aktiven Kontrolleinheit (1, ..., 4) nicht mit den Ausgangsdaten der Mehrheit der operationell passiven Kontrolleinheiten (1, ..., 4) übereinstimmen, wobei eine der operationell passiven Kontrolleinheiten (1, ..., 4) zur Steuerung der Aktuatoreinheiteh (A1, ..., A3) ausgewählt und damit zur neuen operationell aktiven Kontrolleinheit (1, ...., 4) wird, die zur Mehrheit der operationell passiven Kontrolleinheiten (1, ..., 4) mit gleichen Ausgangsdaten gehört, **dadurch gekennzeichnet, dass**
bei Ausfall einer operationell aktiven Kontrolleinheit (1, ..., 4) diejenige operationell passive Kontrolleinheit (1, ..., 4) zur neuen operationell aktiven Kontrolleinheit (1, ...., 4) gewählt wird, welche eine geringste Ausfallwahrscheinlichkeit aufweist, und wobei die Ausgangsdaten in einem Statusvektor abgelegt werden, der zusätzlich Daten mindestens des folgenden Informationstyps umfasst:
- Eigenschaften der Kontrolleinheiten (1, ..., 4), umfassend Anzahl der Fehler und Ausfälle,
wobei die zusätzlichen Daten ebenfalls in den Kontrolleinheiten (1, ..., 4) verarbeitet werden.

2. Verfahren nach Anspruch 1, **dadurch gekennzeichnet, dass** ein Fehlverhalten einer operationell passiven oder der operationen aktiven Kontrolleinheit (1, ..., 4) festgestellt wird, wenn deren Ausgangsdaten nicht mit den Ausgangsdaten der Mehrheit der übrigen operationell aktiven und operationell passiven Kontrolleinheiten (1,..., 4) übereinstimmen, dass in Abhängigkeit des Fehlverhaltens die fehlbare Kontrolleinheit (1, ..., 4) in einen Synchronisationszustand oder in einen Fehlerzustand überführt wird, und dass eine Synchronisation der fehlbaren Kontrolleinheit (1, ..., 4) mit der operationell aktiven Kontrolleinheit (1, ..., 4) bzw. mit den operationell passiven Kontrolleinheiten (1, ..., 4) angestrebt wird.

3. Verfahren nach Anspruch 2, **dadurch gekennzeichnet, dass** eine fehlbare Kontrolleinheit (1, ..., 4), die aufgrund ihres Fehlverhaltens nicht synchronisiert werden kann, in einen Zustand "unrecoverable" versetzt wird.

4. Verfahren nach einem der Ansprüche 1 bis 3, **dadurch gekennzeichnet, dass** die Eingangsdaten der Sensoreinheiten (S1, ..., S4) über Schnittstelleneinheiten (5, ..., 8), an die Kontrolleinheiten (1, ..., 4) übermittelt werden, wobei mindestens eine Sensoreinheit (S1, ..., S4) mit mehreren Schnittstelleneinheiten (5, ...., 8) wirkverbunden ist und wobei die Schnittstelleneinheiten (5, ..., 8) mit jeder der Kontrolleinheiten (1, ..., 4) wirkverbunden sind, und dass die von mehreren Schnittstelleneinheiten (5, ..., 8) stammenden Eingangsdaten einer oder mehrerer identischer Sensoreinheiten (S1, ..., S4) miteinander verglichen werden, wobei diejenigen Eingangsdaten weiterverarbeitet werden, die mit einer Mehrzahl an Eingangsdaten übereinstimmen.

5. Verfahren nach einem der vorangehenden Ansprüche, **dadurch gekennzeichnet, dass** eine kontrollierte Abschaltung vorgenommen wird, falls nur noch eine einzige Kontrolleinheit (1, ..., 4) operationell ist.

6. Verfahren nach einem der vorangehenden Ansprüche, **dadurch gekennzeichnet, dass** die mindestens eine operationell passive Kontrolleinheit (1, ..., 4) synchron zur operationell aktiven Kontrolleinheit (1, ..., 4) betrieben wird.

7. Verfahren nach einem der vorangehenden Ansprüche, dadurch gekenntzeichnet, dass zur Realisierung von nichtfehlersicheren Funktionen weitere Kontrolleinheiten vorgesehen sind, die Zugriff auf alle Informationen haben, wobei die weitere Kontrolleinheit weder operationell aktiv noch operationell passiv sein kann.

8. Verfahren nach einem der vorangehenden Ansprüche, **dadurch gekennzeichnet, dass** der Statusvektor allen Kontrolleinheiten (1, ..., 4) zur Verfügung gestellt wird.

9. Verfahren nach einem der Ansprüche 1 bis 8 , **dadurch gekennzeichnet, dass** Verbindungen zwischen Kontrolleinheiten (1, ..., 4), zwischen Kontrolleinheiten (1, ..., 4) und Aktuatoreinheiten (A1, ..., A3) und zwischen Kontrolleinheiten (1, ..., 4) und Sensoreinheiten (S1, ..., S4) über ein Netzwerk (10) geführt werden und wobei eine Fehlererkennung von über das Netzwerk (10) übertragenen Nachrichten und eine Verbindungsüberwachung durch Implementierung einer Sicherheitsstufe von SIL-(Savety Integrity Level) 2 oder höher sicher erfolgen.

10. Hochverfügbares und fehlersicheres System, umfassend :
- mindestens drei Kontrolleinheiten (1, ..., 4), die zum Austauschen von Daten miteinander wirkverbunden sind,
- mehrere, Eingangsdaten erzeugende Sensoreinheiten (S1, ..., S4), die mit jeder der mindestens drei. Kontrolleinheiten (1, ..., 4) wirkverbunden sind,
- mehrere Aktuatoreinheiten (A1, ..., A3), die mit jeder der mindestens drei Kontrolleinheiten (1, ..., 4) wirkverbunden sind,
- wobei eine einzige der mindestens drei Kontrolleinheiten (1, ..., 4) operationell aktiv ist, wobei die operationell aktive Kontrolleinheit (1, ..., 4) Ausgangsdaten für alle Aktuatoreinheiten (A1, ..., A3) erzeugt,
- wobei mindestens eine weitere der mindestens drei Kontrolleinheiten (1, ..., 4) operationell passiv ist bzw. sind, wobei alle operationell passiven Kontrolleinheiten (1, ..., 4) dieselben Eingangsdaten wie die operationell aktive Kontrolleinheit (1, ..., 4) erhalten und ebenfalls Ausgangsdaten für alle Aktuatoreinheiten. (A1, ..., A3) erzeugten,
- wobei der operationell aktiven und jeder operationell passiven Kontrolleinheit (1, ..., 4) die Ausgangsdaten aller anderten Kontrolleinheiten zuführbar sind, die operationell aktiv oder operationell passiv sind,
- wobei in der operationell aktiven Kontrolleinheit (1, ..., 4) und in jeder der operationell passiven Kontrolleinheit (1, ..., 4) Mittel zum Vergleichen der Ausgangsdaten der operationell aktiven Kontrolleinheit (1, ..., 4) mit den Ausgangsdaten aller operationell passiven Kontrolleinheit (1, ..., 4) vorhanden sind,
- wobei die Ausgangsdaten der operationell aktiven Kontrolleinheit (1, ..., 4) zur Steuerung der Aktuatoreinheiten (A1, ..., A3) verwendbar sind, falls die Ausgangsdaten der Operationell aktiven Kontrolleinheit (1, ..., 4) mit den Ausgangsdaten der einzigen operationell passiven Kontrolleinheit (1, ..., 4) übereinstimmen oder, sofern mehrere, operationell passive Kontrolleinheiten (1, ..., 4) vorhanden sind, falls die Ausgangsdaten der operationell aktiven Kontrolleinheit (1, ..., 4) mit den Ausgangsdaten der Mehrheit der operationell passiven Kontrolleinheiten (1, ..., 4) übereinstimmen,
- wobei die Ausgangsdaten einer der operationell passiven Kontrolleinheiten, (1, ..., 4) zur Steuerung der Aktuatoreinheiten (A1, ..., A3) verwendbar sind, falls die Ausgangsdaten der operationell aktiven Kontrolleinheit (1, ...., 4) nicht mit den Ausgangsdaten der Mehrheit der operationell passiven Koritrölleinheiten (1, ..., 4) übereinstimmen, wobei eine der operationell passiven Kontrolleinheiten (1, ..., 4) zur Steuerung der Aktuatoreinheiten (A1, ..., A3) wählbar und damit zur neuen operationell aktiven Kontrolleinheit (1, ..., 4) wird, die zur Mehrheit der operationell passiven Kontrolleinheiten (1, ..., 4) mit gleichen Ausgangsdaten gehört, **dadurch gekennzeichnet,**
- **dass** bei Ausfall einer operationell aktiven Kontrolleinheit (1, ..., 4) diejenige operationell passive Kontrolleinheit (1, ..., 4) zur neuen Operationell aktiven Kontrolleinheit (1, ..., 4) wählbar ist, welche eine geringste Ausfallwahrscheinlichkeit ausweist, und
- **dass** die Ausgangsdaten in einem Statubvektor ablegbar sind, der zusätzliche Daten mindestens des folgenden Informationstyps umfasst :
- Eigenschaften der Kontrolleinheiten (1, ..., 4), umfassend Anzahl der Fehler und Ausfälle,
- wobei die zusätzlichen Daten ebenfalls in den Kontrolleinheiten (1, ..., 4) verarbeitbar sind.

11. System nach Anspruch 10, **dadurch gekennzeichnet, dass** ein Fehlverhalten einer operationell passive oder der operationell aktiven Kontrolleinheit (1, ..., 4) feststellbar ist, wenn deren Ausgangsdaten nicht mit den Ausgangsdaten der Mehrheit der übrigen operationell aktiven und Operationell passiven Kontrolleinheiten (1, ..., 4) übereinstimmen, dass in Abhängigkeit des Fehlverhaltens die fehlbare Kontrolleinheit, (1, ..., 4) in einen Synchronisationszustand oder in einen Fehlerzustand überführbar ist, und dass eine Synchronisation der fehlbaren Kontrolleinheit (1, ..., 4) mit der operationell aktiven Kontrolleinheit (1, ..., 4) bzw. mit den operationell passiven Kontrolleinheiten (1, ..., 4) angestrebt wird.

12. System nach Anspruch 11, **dadurch gekennzeichnet, dass** eine fehlbare Kontrolleinheit (1, ...., 4), die aufgrund ihres Fehlverhaltens nicht synchronisierbar ist, in einen Zustand "unrecoverable" versetzbar ist.

13. System nach einem der Ansprüche 10 bis 12, **dadurch gekennzeichnet, dass** die Eingangsdaten der Sensoreinheiten (S1, ..., S4) über Schnittstelleneinheiten (5, ..., 8) an die Kontrolleinheiten (1, ..., 4) übermittelbar sind, wobei mindestens eine Sensoreinheit (S1, ..., S4) mit mehreren Schnittstelleneinheiten (5, ..., 8) wirkverbunden ist und wobei die Schnittstelleneinheiten 5, ..., 8) mit jeder der Kontrolleinheiten (1, ..., 4) wirkverbunden sind, und dass Mittel zum Vergleichen der von mehreren Schnittstelleneinheiten (5, ..., 8) stammenden Eingangsdaten einer oder mehrerer identischer Sensoreinheiten (S1, ..., S4) vorhanden sind, wobei diejenigen Eingangsdaten weiter verarbeitbar sind, die mit einer Mehrzahl an Eingangsdaten übereinstimmen.

14. System nach einem der Ansprüche 10 bis 13, **dadurch gekennzeichnet, dass** eine kontrollierte Abschaltung vornehmbar ist, falls nur noch eine einzige Kontrolleinheit (1, ..., 4) operationeil ist.

15. System nach einem der Ansprüche 10 bis 14, **dadurch gekennzeichnet, dass** die mindestens eine operationell passive Kontrolleinheit (1, ..., 4) synchron zur operationell aktiven Kontrolleinheit (1, ..., 4) betreibbar ist.

16. System nach einem der Ansprüche 10 bis 15, **dadurch gekennzeichnet, dass** zur Realisierung von nichtfehlersicheren Funktionen weitere Kontrolleinheiten vorgesehen sind, die zugriff auf alle Informationen haben, wobei die weitere Kontrolleinheit wender operationell aktiv noch operationell passiv sein kann.

17. System nach einem der Ansprüche 10 bis 16, **dadurch gekennzeichnet, dass** Verbindungen zwischen Kontrolleinheiten (1, ..., 4), zwischen Kontrolleinheiten (1, ..., 4) und Aktuatoreinheiten (A1, ..., A3) und zwischen Kontrolleinheiten (1, ..., 4) und Sensoreinheiten (S1, ..., S4) über ein Netzwerk (10) geführt sind und wobei eine Fehlererkennung von über das Netzwerk (10) übertragbaren Nachrichten und eine Verbihdungsüberwachung durch Implementierung einer Sicherheitsstufe von SIL-(Savety Integrity Level) 2 öder höher sicher erfolgen.

## Claims

1. Method for operating a high availability and failsafe system comprising:
- at least three control units (1, ..., 4), which are operatively connected to each other for exchanging data,
- several input data generating sensor units (S1, ..., S4), which are operatively connected to each of the at least three control units (1, ..., 4),
- several actuator units (A1, ..., A3), which are operatively connected to each of the at least three control units (1, ..., 4),
wherein the method consists of
- that a single one of the at least three control units (1, ..., 4) is determined, which is operationally active, wherein the operationally active control unit (1, ..., 4) generates output data for all actuator units (A1, ..., A3),
- that at least a further one of the at least three control units (1, ..., 4) is determined, which is, respectively are, operationally passive, wherein all operationally passive control units (1, ..., 4) receive the same input data as the operationally active control unit (1, ..., 4) and also generate output data for all actuator units (A1, ..., A3),
- that the operationally active and each operationally passive control unit (1, ..., 4) are supplied with the output data of all other control units (1, ..., 4), which are operationally active or passive,
- that the output data of the operationally active control unit (1, ..., 4) and the output data of all operationally passive control units (1, ..., 4) are compared to each other in the operationally active control unit (1, ..., 4) and in each of the operationally passive control units (1, ..., 4),
- that the output data of the operationally active control unit (1, ..., 4) is used for controlling the actuator units (A1, ..., A3), if the output data of the operationally active control unit (1, ..., 4) is in accordance with the output data of the single operationally passive control unit (1, ..., 4), or, in case there are several operationally passive control units (1, ..., 4), if the output data of the operationally active control unit (1, ..., 4) is in accordance with the output data of the majority of the operationally passive control units (1, ..., 4), and
- that the output data of one of the operationally passive control units (1, ..., 4) is used for controlling the actuator units (A1, ..., A3), if the output data of the operationally active control unit (1, ..., 4) is not in accordance with the majority of the operationally passive control units (1, ..., 4), wherein one of the operationally passive control units (1, ..., 4) is selected for controlling the actuator units (A1, ..., A3) and consequently becomes the new operationally active control unit (1, ..., 4), which belongs to the majority of operationally passive control units (1, ..., 4) having similar output data,
**characterized in that** in case of failure of an operationally active control unit (1, ..., 4), exactly the operationally passive control unit (1, ..., 4) is selected to become the new operationally active control unit (1, ..., 4) that possesses a least failure probability and wherein the output data is stored in a status vector, which comprises additional data of at least the following information type:
- characteristics of the control units (1, ..., 4) comprising number of errors and failures,
wherein the additional data is also processed in the control units (1, ..., 4).

2. Method according to claim 1, **characterized in that** a maloperation of an operationally passive or of the operationally active control unit (1, ..., 4) is detected, if their output data is not in accordance with the output data of the majority of the remaining operationally active and operationally passive control units (1, ..., 4), that the maloperating control unit (1, ..., 4) in dependency of the maloperation is transferred into a synchronization state or into an error state and that a synchronization of the maloperating control unit (1, ..., 4) with the operationally active control unit (1, ..., 4), respectively to the operationally passive control units (1, ..., 4), is pursued.

3. Method according to claim 2, **characterized in that** the maloperating control unit (1, ..., 4), which cannot be synchronized due to its maloperation, is transferred into an "unrecoverable" state.

4. Method according to one of the claims 1 to 3, **characterized in that** the input data of the sensor units (S1, ..., S4) is transferred via interface units (5, ..., 8) to the control units (1, ..., 4), wherein at least one sensor unit (S1, ..., S4) is operatively connected to several interface units (5, ..., 8) and wherein the interface units (5, ..., 8) are operatively connected to each of the control units (1, ..., 4) and that the input data of one or several identical sensor units (S1, ..., S4) originating from one or several identical sensor units (S1, ..., S4) are compared to each other, wherein such input data is processed, which is in accordance with a majority of input data.

5. Method according to one of the preceding claims, **characterized in that** a controlled switch-off is executed, if only a single control unit (1, ..., 4) is still operational.

6. Method according to one of the preceding claims, **characterized in that** the at least one operationally passive control unit (1, ..., 4) is synchronously operated to the operationally active control unit (1, ..., 4).

7. Method according to one of the preceding claims, **characterized in that** for realizing non-failsafe functions further control units are provided, which have access to all information, wherein the further control unit can neither be operationally active nor operationally passive.

8. Method according to one of the preceding claims, **characterized in that** the status vector is made available to all control units (1, ..., 4).

9. Method according to one of the claims 1 to 8, **characterized in that** connections between control units (1, ..., 4), between control units (1, ..., 4) and actuator units (A1, ..., A3) and between control units (1, ..., 4) and sensor units (S1, ..., S4) are provided via a network (10) and wherein an error detection for messages transmitted via the network (10) and a connection monitoring by implementation of a safety level of SIL-(Safety Integrity Level) 2 or higher are securely carried out.

10. High availability and failsafe system comprising:
- at least three control units (1, ..., 4), which are operatively connected to each other for exchanging data,
- several input data generating sensor units (S1, ..., S4), which are operatively connected to each of the at least three control units (1, ..., 4),
- several actuator units (A1, ..., A3), which are operatively connected to each of the at least three control units (1, ..., 4),
- wherein a single one of the at least three control units (1, ..., 4) is operationally active, wherein the operationally active control unit (1, ..., 4) generates output data for all actuator units (A1, ..., A3),
- wherein at least a further one of the at least three control units (1, ..., 4) is, respectively are, operationally passive, wherein all operationally passive control units (1, ..., 4) receive the same input data as the operationally active control unit (1, ..., 4) and also generate output data for all actuator units (A1, ..., A3),
- wherein the operationally active and each operationally passive control unit (1, ..., 4) can be supplied with the output data of all other control units, which are operationally active or passive,
- wherein in the operationally active control unit (1, ..., 4) and in each of the operationally passive control units (1, ..., 4) means for comparing the output data of the operationally active control unit (1, ..., 4) to the output data of all operationally passive control units (1, ..., 4) are present,
- wherein the output data of the operationally active control unit (1, ..., 4) is applicable for controlling the actuator units (A1, ..., A3), if the output data of the operationally active control unit (1, ..., 4) is in accordance with the output data of the single operationally passive control unit (1, ..., 4), or, in case there are several operationally passive control units (1, ..., 4), if the output data of the operationally active control unit (1, ..., 4) is in accordance with the output data of the majority of the operationally passive control units (1, ..., 4),
- wherein the output data of one of the operationally passive control units (1, ..., 4) is applicable for controlling the actuator units (A1, ..., A3), if the output data of the operationally active control unit (1, ..., 4) is not in accordance with the majority of the operationally passive control units (1, ..., 4), wherein one of the operationally passive control units (1, ..., 4) is selectable for controlling the actuator units (A1, ..., A3) and consequently becomes the new operationally active control unit (1, ..., 4), which belongs to the majority of operationally passive control units (1, ..., 4) having similar output data, **characterized in**
- **that** in case of failure of an operationally active control unit (1, ..., 4), exactly the operationally passive control unit (1, ..., 4) is selectable to become the new operationally active control unit (1, ..., 4) that possesses the least failure probability, and
- **that** the output data is storable in a status vector, which comprises additional data of at least the following information type:
- characteristics of the control units (1, ..., 4) comprising number of errors and failures,
- wherein the additional data is also processible in the control units (1, ..., 4).

11. System according to claim 10, **characterized in that** a maloperation of an operationally passive or of the operationally active control unit (1, ..., 4) is detectable, if their output data is not in accordance with the output data of the majority of the remaining operationally active and operationally passive control units (1, ..., 4), that the maloperating control unit (1, ..., 4) in dependency of the maloperation is transferable into a synchronization state or into an error state and that a synchronization of the maloperating control unit (1, ..., 4) with the operationally active control unit (1, ..., 4), respectively to the operationally passive control units (1, ..., 4), is pursued.

12. System according to claim 11, **characterized in that** a maloperating control unit (1, ..., 4), which cannot be synchronized due to its maloperation, is transferable into a "unrecoverable" state.

13. System according to one of the claims 10 to 12, **characterized in that** the input data of the sensor units (S1, ..., S4) are transferable via interface units (5, ..., 8) to the control units (1, ..., 4), wherein at least one sensor unit (S1, ..., S4) is operatively connected to several interface units (5, ..., 8) and wherein the interface units (5, ..., 8) are operatively connected to each of the control units (1, ..., 4) and that means for comparing the input data of one or several sensor units (S1, ..., S4) originating from one or several interface units (5, ..., 8) are present, wherein such input data is processed, which is in accordance with a majority of input data.

14. System according to one of the claims 10 to 13, **characterized in that** a controlled switch-off is executable, if only a single control unit (1, ..., 4) is still operational.

15. System according to one of the claims 10 to 14, **characterized in that** the at least one operationally passive control unit (1, ..., 4) is synchronously operable to the operationally active control unit (1, ..., 4).

16. System according to one of the claims 10 to 15, **characterized in that** for realizing non-failsafe functions further control units are provided, which have access to all information, wherein the further control unit can neither be operationally active nor operationally passive.

17. System according to one of the claims 10 to 16, **characterized in that** connections between control units (1, ..., 4), between control units (1, ..., 4) and actuator units (A1, ..., A3) and between control units (1, ..., 4) and sensor units (S1, ..., S4) are provided via a network (10) and wherein an error detection for messages transmitted via the network (10) and a connection monitoring by implementation of a safety level of SIL-(Safety Integrity Level) 2 or higher are securely carried out.

## Revendications

1. Procédé pour faire fonctionner un système hautement disponible et fiable comprenant :
- au moins trois unités de contrôle (1, ..., 4), qui sont en liaison active les unes avec les autres pour échanger des données,
- plusieurs unités de détection (S1, ..., S4) générant des données d'entrée qui sont en liaison active avec chacune des au moins trois unités de contrôle (1, ..., 4),
- plusieurs unités d'actionnement (A1, ..., A3) qui sont en liaison active avec chacune des au moins trois unités de contrôle (1, ..., 4),
le procédé consistant à :
- définir une seule unité parmi les au moins trois unités de contrôle (1, ..., 4) qui sera opérationnellement active, l'unité de contrôle opérationnellement active (1, ..., 4) générant des données de sortie pour toutes les unités d'actionnement (A1, ..., A3),
- définir au moins une autre unité parmi les au moins trois unités de contrôle (1, ..., 4) qui sera opérationnellement passive, toutes les unités de contrôle opérationnellement passives (1, ..., 4) recevant les mêmes données d'entrée que l'unité de contrôle opérationnellement active (1, ..., 4) et générant également des données de sortie pour toutes les unités d'actionnement (A1, ..., A3),
- amener à l'unité de contrôle opérationnellement active et à chaque unité de contrôle opérationnellement passive (1, ..., 4) les données de sortie de toutes les autres unités de contrôle (1, ..., 4) qui sont opérationnellement actives ou opérationnellement passives,
- comparer entre elles dans l'unité de contrôle opérationnellement active (1, ..., 4) et dans chacune des unités de contrôle opérationnellement passives (1, ..., 4) les données de sortie de l'unité de contrôle opérationnellement active (1, ..., 4) et les données de sortie de toutes les unités de contrôle opérationnellement passives (1, ..., 4),
- utiliser les données de sortie de l'unité de contrôle opérationnellement active (1, ..., 4) pour commander les unités d'actionnement (A1, ..., A3) dans le cas où les données de sortie de l'unité de contrôle opérationnellement active (1, ..., 4) correspondent aux données de sortie de l'unique unité de contrôle opérationnellement passive (1, ..., 4) ou, s'il y a plusieurs unités de contrôle opérationnellement passives (1, ..., 4) lorsque les données de sortie de l'unité de contrôle opérationnellement active (1, ..., 4) correspondent aux données de sortie de la majorité des unités de contrôle opérationnellement passives (1, ..., 4), et
- utiliser les données de sortie de l'une des unités de contrôle opérationnellement passives (1, ..., 4) pour commander les unités d'actionnement (A1, ... A3) dans le cas où les données de sortie de l'unité de contrôle opérationnellement active (1, ..., 4) ne correspondent pas aux données de sortie de la majorité des unités de contrôle opérationnellement passives (1, ..., 4), l'une des unités de contrôle opérationnellement passives (1, ..., 4) étant choisie pour commander les unités d'actionnement (A1, ..., A3) et devenant ainsi une nouvelle unité de contrôle opérationnellement active (1, ..., 4) qui appartient à la majorité des unités de contrôle opérationnellement passives (1, ..., 4) avec des données de sortie identiques,
**caractérisé en ce que**, en cas de défaillance d'une unité de contrôle opérationnellement active (1, ..., 4), on choisit comme nouvelle unité de contrôle opérationnellement active (1, ..., 4) l'unité de contrôle opérationnellement passive (1, ..., 4) qui présente la probabilité de défaillance la plus faible, et dans lequel les données de sortie sont déposées dans un vecteur de statut qui comprend des données supplémentaires au moins du type suivant :
- propriétés des unités de contrôle (1, ..., 4) y compris le nombre d'erreurs et de défaillances,
les données supplémentaires étant également traitées dans les unités de contrôle (1, ..., 4).

2. Procédé selon la revendication 1, **caractérisé en ce qu'**un comportement défectueux d'une unité de contrôle opérationnellement passive ou de l'unité de contrôle opérationnellement active (1, ..., 4) est constaté lorsque les données de sortie de cette dernière ne correspondent pas aux données de sortie de la majorité des autres unités de contrôle opérationnellement actives et opérationnellement passives (1, ..., 4), **en ce qu'**en fonction du comportement défectueux, l'unité de contrôle défectueuse (1, ..., 4) passe dans un état de synchronisation ou dans un état de défaut, et **en ce qu'**il est procédé à une synchronisation de l'unité de contrôle défectueuse (1, ..., 4) avec l'unité de contrôle opérationnellement active (1, ..., 4) ou avec les unités de contrôle opérationnellement passives (1, ..., 4).

3. Procédé selon la revendication 2, **caractérisé en ce qu'**une unité de contrôle défectueuse (1, ..., 4) qui ne peut pas être synchronisée en raison de son comportement défectueux, passe à un état « unrecoverable ».

4. Procédé selon l'une des revendications 1 à 3, **caractérisé en ce que** les données d'entrée des unités de détection (S1, ..., S4) sont transmises aux unités de contrôles (1, ..., 4) via des unités d'interface (5, ..., 8), au moins une unité de détection (S1, ..., S4) étant en liaison active avec plusieurs unités d'interface (5, ..., 8) et les unités d'interface (5, ..., 8) étant en liaison active avec chacune des unités de contrôle (1, ..., 4), et **en ce que** les données d'entrée d'une ou de plusieurs unités de détection identiques (S1, ..., S4) provenant de plusieurs unités d'interface (5, ..., 8) sont comparées entre elles, les données d'entrée correspondant à une majorité des données d'entrée étant traitées.

5. Procédé selon l'une des revendications précédentes, **caractérisé en ce qu'**il est procédé à une coupure contrôlée dans le cas où une seule unité de contrôle (1, ..., 4) est encore opérationnelle.

6. Procédé selon l'une des revendications précédentes, **caractérisé en ce que** la au moins une unité de contrôle opérationnellement passive (1, ..., 4) est actionnée de façon synchrone par rapport à l'unité de contrôle opérationnellement active (1, ..., 4).

7. Procédé selon l'une des revendications précédentes, **caractérisé en ce que** pour réaliser des fonctions non protégées contre les erreurs, il est prévu d'autres unités de contrôle qui ont accès à toutes les informations, ces autres unités de contrôle ne pouvant être ni opérationnellement actives ni opérationnellement passives.

8. Procédé selon l'une des revendications précédentes, **caractérisé en ce que** le vecteur de statut est mis à la disposition de toutes les unités de contrôle (1, ..., 4).

9. Procédé selon l'une des revendications 1 à 8, **caractérisé en ce que** les connexions entre les unités de contrôle (1, ..., 4), entre les unités de contrôle (1, ... 4) et les unités d'actionnement (A1, ..., A3) et entre les unités de contrôle (1, ..., 4) et les unités de détection (S1, ..., S4) se font via un réseau (10), une détection de défaut des messages transmis par le réseau et une surveillance de la liaison s'exerçant via la mise en oeuvre d'un niveau d'intégrité de sécurité (SIL) 2 ou supérieur.

10. Système hautement disponible et fiable comprenant :
- au moins trois unités de contrôle (1, ..., 4), qui sont en liaison active les unes avec les autres pour échanger des données,
- plusieurs unités de détection (S1, ..., S4) générant des données d'entrée qui sont en liaison active avec chacune des au moins trois unités de contrôle (1, ..., 4),
- plusieurs unités d'actionnement (A1, ..., A3) qui sont en liaison active avec chacune des au moins trois unités de contrôle (1, ..., 4),
- une seule unité parmi les au moins trois unités de contrôle (1, ..., 4) étant opérationnellement active, l'unité de contrôle opérationnellement active (1, ..., 4) générant des données de sortie pour toutes les unités d'actionnement (A1, ..., A3),
- au moins une autre unité parmi les au moins trois unités de contrôle (1, ..., 4) étant opérationnellement passive, toutes les unités de contrôle opérationnellement passives (1, ..., 4) recevant les mêmes données d'entrée que l'unité de contrôle opérationnellement active (1, ..., 4) et générant également des données de sortie pour toutes les unités d'actionnement (A1, ..., A3),
- les données de sortie de toutes les autres unités de contrôle qui sont opérationnellement actives ou opérationnellement passives pouvant être amenées à l'unité de contrôle opérationnellement active et à chaque unité de contrôle opérationnellement passive (1, ..., 4),
- des moyens étant prévus dans l'unité de contrôle opérationnellement active (1, ..., 4) et dans chacune des unités de contrôle opérationnellement passives (1, ..., 4) pour comparer entre elles les données de sortie de l'unité de contrôle opérationnellement active (1, ..., 4) et les données de sortie de toutes les unités de contrôle opérationnellement passives (1, ..., 4),
- les données de sortie de l'unité de contrôle opérationnellement active (1, ..., 4) pouvant être utilisées pour commander les unités d'actionnement (A1, ..., A3) dans le cas où les données de sortie de l'unité de contrôle opérationnellement active (1, ..., 4) correspondent aux données de sortie de l'unique unité de contrôle opérationnellement passive (1, ..., 4) ou, s'il y a plusieurs unités de contrôle opérationnellement passives (1, ..., 4) lorsque les données de sortie de l'unité de contrôle opérationnellement active (1, ..., 4) correspondent aux données de sortie de la majorité des unités de contrôle opérationnellement passives (1, ..., 4),
- les données de sortie de l'une des unités de contrôle opérationnellement passives (1, ..., 4) pouvant être utilisées pour commander les unités d'actionnement (A1, ... A3) dans le cas où les données de sortie de l'unité de contrôle opérationnellement active (1, ..., 4) ne correspondent pas aux données de sortie de la majorité des unités de contrôle opérationnellement passives (1, ..., 4), l'une des unités de contrôle opérationnellement passives (1, ..., 4) pouvant être choisie pour commander les unités d'actionnement (A1, ..., A3) et ainsi devenir une nouvelle unité de contrôle opérationnellement active (1, ..., 4) qui appartient à la majorité des unités de contrôle opérationnellement passives (1, ..., 4) avec des données de sortie identiques,
**caractérisé en ce que**,
- en cas de défaillance d'une unité de contrôle opérationnellement active (1, ..., 4), on peut choisir comme nouvelle unité de contrôle opérationnellement active (1, ..., 4) l'unité de contrôle opérationnellement passive (1, ..., 4) qui présente la probabilité de défaillance la plus faible,
- et **en ce que** les données de sortie peuvent être déposées dans un vecteur de statut qui comprend des données supplémentaires au moins du type suivant :
- propriétés des unités de contrôle (1, ..., 4) y compris le nombre d'erreurs et de défaillances,
- les données supplémentaires pouvant être également traitées dans les unités de contrôle (1, ..., 4).

11. Système selon la revendication 10, **caractérisé en ce qu'**un comportement défectueux d'une unité de contrôle opérationnellement passive ou de l'unité de contrôle opérationnellement active (1, ..., 4) peut être constaté lorsque les données de sortie de ces dernières ne correspondent pas aux données de sortie de la majorité des autres unités de contrôle opérationnellement actives et opérationnellement passives (1, ..., 4), **en ce qu'**en fonction du comportement défectueux, l'unité de contrôle défectueuse (1, ..., 4) peut passer dans un état de synchronisation ou dans un état de défaut, et **en ce qu'**il est procédé à une synchronisation de l'unité de contrôle défectueuse (1, ..., 4) avec l'unité de contrôle opérationnellement active (1, ..., 4) ou avec les unités de contrôle opérationnellement passives (1, ..., 4).

12. Système selon la revendication 11, **caractérisé en ce qu'**une unité de contrôle défectueuse (1, ..., 4) qui ne peut pas être synchronisée en raison de son comportement défectueux, peut passer à un état « unrecoverable ».

13. Système selon l'une des revendications 10 à 12, **caractérisé en ce que** les données d'entrée des unités de détection (S1, ..., S4) peuvent être transmises aux unités de contrôles (1, ..., 4) via des unités d'interface (5, ..., 8), au moins une unité de détection (S1, ..., S4) étant en liaison active avec plusieurs unités d'interface (5, ..., 8) et les unités d'interface (5, ..., 8) étant en liaison active avec chacune des unités de contrôle (1, ..., 4), et **en ce qu'**il est prévu des moyens pour comparer les données d'entrée d'une ou de plusieurs unités de détection identiques (S1, ..., S4) provenant de plusieurs unités d'interface (5, ..., 8), les données d'entrée correspondant à la majorité des données d'entrée pouvant être traitées.

14. Système selon l'une des revendications 10 à 13, **caractérisé en ce qu'**il peut être procédé à une coupure contrôlée dans le cas où une seule unité de contrôle (1, ..., 4) est encore opérationnelle.

15. Système selon l'une des revendications 10 à 14, **caractérisé en ce que** la au moins une unité de contrôle opérationnellement passive (1, ..., 4) peut être actionnée de façon synchrone par rapport à l'unité de contrôle opérationnellement active (1, ..., 4).

16. Système selon l'une des revendications 10 à 15, **caractérisé en ce que** pour réaliser des fonctions non protégées contre les erreurs, il est prévu d'autres unités de contrôle qui ont accès à toutes les informations, ces unités de contrôle ne pouvant être ni opérationnellement actives ni opérationnellement passives.

17. Système selon l'une des revendications 10 à 16, **caractérisé en ce que** les connexions entre les unités de contrôle (1, ..., 4), entre les unités de contrôle (1, ... 4) et les unités d'actionnement (A1, ..., A3) et entre les unités de contrôle (1, ..., 4) et les unités de détection (S1, ..., S4) se font via un réseau (10), une détection de défaut des messages transmis par le réseau et une surveillance de la liaison s'exerçant via la mise en oeuvre d'un niveau d'intégrité de sécurité (SIL) 2 ou supérieur.
